(19) Europäisches Patentamt
European Patent Office
Office européen des brevets

(11) **EP 3 945 423 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(21) Anmeldenummer: **21181569.1**

(22) Anmeldetag: **24.06.2021**

(51) Internationale Patentklassifikation (IPC):
**G06F 11/30** $^{(2006.01)}$     **G06F 11/07** $^{(2006.01)}$
**G06F 17/40** $^{(2006.01)}$     **G06F 11/34** $^{(2006.01)}$

(52) Gemeinsame Patentklassifikation (CPC):
**G06F 11/0751; G06F 11/0766; G06F 11/3452; G06F 17/40**

(54) **VERFAHREN ZUR DETEKTION VON ANOMALEN BETRIEBSZUSTÄNDEN EINES COMPUTERSYSTEMS**

METHOD FOR DETECTING ABNORMAL OPERATING STATES OF A COMPUTER SYSTEM

PROCÉDÉ DE DÉTECTION DES ÉTATS DE FONCTIONNEMENT ANORMALES D'UN SYSTÈME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2020   AT 506422020**

(43) Veröffentlichungstag der Anmeldung:
**02.02.2022   Patentblatt 2022/05**

(73) Patentinhaber: **AIT Austrian Institute of Technology GmbH**
**1210 Wien (AT)**

(72) Erfinder:
• **HÖLD, Georg**
**3500 Krems (AT)**
• **WURZENBERGER, Markus**
**1090 Wien (AT)**
• **LANDAUER, Max**
**1070 Wien (AT)**

• **SKOPIK, Florian**
**2000 Stockerau (AT)**

(74) Vertreter: **Wildhack & Jellinek**
**Patentanwälte OG**
**Landstraßer Hauptstraße 50**
**1030 Wien (AT)**

(56) Entgegenhaltungen:
**US-A1- 2004 254 919     US-A1- 2018 270 262**
**US-A1- 2019 251 093**

• **Jan Valdman: "Log File Analysis", , 1. Juli 2001 (2001-07-01), XP055227299, Gefunden im Internet: URL:https://www.kiv.zcu.cz/site/documents/ verejne/vyzkum/publikace/technicke-zpravy/ 2001/tr-2001-04.pdf [gefunden am 2015-11-10]**

EP 3 945 423 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Detektion von anomalen Betriebszuständen eines Computersystems gemäß dem Oberbegriff von Patentanspruch 1.

Aus dem Stand der Technik ist bekannt, Protokolldateien, die von unterschiedlichen Prozessen erstellt werden, daraufhin zu untersuchen, ob die in den Protokolldateien beschriebenen Vorgänge einen anomalen Zustand der Prozesse bzw. des Computernetzwerks darstellen, in dem diese Prozesse ablaufen.

Bei den vorstehend genannten Verfahren bestehen wesentliche Probleme, die Werte der üblicherweise in für Menschen lesbarer Form geschriebenen Protokolldateien auf bestimmte Muster hin zu analysieren, um somit Betriebszustände zu erkennen, die ungewöhnlich oder einzigartig sind und auf anomale Betriebszustände hindeuten.

Solche Vorgehensweisen ermöglichen grundsätzlich das Auffinden von anomalen Zuständen in einem Computernetzwerk, sind jedoch relativ komplex und erfordern es, die Werte der Token einzeln auf Muster zu analysieren und anschließend neue Protokolldateien auf die gefundenen Muster hin zu analysieren, was insgesamt zu einem erhöhten Ressourcenbedarf der Protokolldatenanalyse führt. Aus dem Stand der Technik sind jedoch keine konkreten Verfahren bekannt, die versuchen, die Werte aller Token der Protokollzeilen gleichzeitig auf Muster hin zu analysieren.

In der US 2018/270262 ist ein Verfahren zur Detektion von anomalen Betriebszuständen beschrieben.

Aufgabe der Erfindung ist es daher, diese Probleme zu lösen und ein Verfahren zur Detektion von anomalen Betriebszuständen eines Computersystems zur Verfügung zu stellen, mit dem eine rasche und effiziente Untersuchung von, vom Computersystem erstellten, Protokollzeilen ermöglicht wird, sodass Anomalien im Verhalten des Computersystems zuverlässig und ressourcensparend detektiert werden können bzw. eine zeit- und rechenleistungssparende Initialisierung bzw. neuerliche Initialisierung der Datentypen ermöglicht wird.

Die Erfindung löst diese Aufgabe bei einem Verfahren zur Detektion von anomalen Betriebszuständen eines Computersystems,

- wobei während des Betriebs von dem Computer oder von auf dem Computer ablaufenden Prozessen Protokolle erstellt werden, indem bei Auftreten vorgegebener Ereignisse für jedes dieser Ereignisse jeweils eine Protokollzeile in Form einer Zeichenabfolge erstellt wird, wobei der Aufbau der Protokollzeile einer vom jeweiligen Computer und/oder Prozess vorgegebenen Syntax entspricht,
- wobei die einzelnen Protokollzeilen an vorgegebenen Trennzeichen in Teilzeichenabfolgen unterteilt werden,
- wobei den einzelnen Protokollzeilen basierend auf deren Syntax, insbesondere aufgrund der Ähnlichkeit der einzelnen Protokollzeilen zueinander und aufgrund der die Protokollzeilen aufbauenden Teilzeichenabfolgen, jeweils zumindest ein Ereignistyp zugewiesen wird,
- wobei für jeden Ereignistyp ein Template umfassend eine Anzahl von Teilzeichenabfolgen der Protokollzeilen des jeweiligen Ereignistyp repräsentierenden Token, erstellt wird,

  - wobei das Template die Struktur der einem jeweiligen Ereignistyp zugeordneten Protokollzeilen beschreibt, und
  - wobei das Template eine Anzahl von Token mit statischem Inhalt, insbesondere statischen Werten, umfasst, die in ihrer Reihenfolge in ausgewählten, insbesondere allen, Protokollzeilen des jeweiligen Ereignistyps vorhanden sind, und wobei die Token mit statischem Inhalt des Templates durch Token mit variablen Inhalt, insbesondere variablen Werten, unterbrochen werden, und

- wobei die Protokollzeilen und deren Teilzeichenabfolgen charakteristisch für den Betriebszustand des Computersystems sind,

mit den kennzeichnenden Merkmalen von Patentanspruch 1.

Erfindungsgemäß ist dabei vorgesehen,

- dass für die Templates der einzelnen Ereignistypen erlernt wird, welchem Datentyp und/oder welchem Verteilungstyp die einzelnen Token des jeweiligen Templates angehören, indem auf Grundlage einer Stichprobe umfassend eine Anzahl an Protokollzeilen des jeweiligen Ereignistyps eine Initialisierung der Datentypen der einzelnen Token des Templates des Ereignistyps vorgenommen wird,

  - wobei jeweils eine Werteliste für die einzelnen Token erstellt wird, wobei die Werteliste des jeweiligen Tokens jeweils eine Liste derjenigen Teilzeichenketten der Protokollzeilen der Stichprobe umfasst, welche dem jeweiligen Token zugehörig sind,
  - wobei die einzelnen Wertelisten in einem sequenziellen Testablauf auf deren Zugehörigkeit zu vorgegebenen Datentypen und/oder Verteilungstypen, welche Eigenschaften der Wertemenge der jeweiligen Werteliste beschreiben, getestet werden,

in der folgenden Reihenfolge und zu den folgenden zu Datentypen und/oder Verteilungstypen:

- chronologischer Datentyp,
- statischer Datentyp,
- auf- oder absteigender Datentyp,
- kontinuierlicher Datentyp
- einzigartiger Datentyp,
- diskreter Datentyp,

- wobei den einzelnen Token des Ereignistyps jeweils derjenige Datentyp und/oder Verteilungstyp zugeordnet wird, bei dem der Test in der gewählten Reihenfolge auf Zugehörigkeit zuerst positiv ausfällt, und
- wobei der Datentyp derjenigen Token des Ereignistyps, bei denen keiner der Tests des Testablaufs positiv ausfällt, als sonstiger Datentyp festgelegt wird,

- dass periodisch sobald eine Abfolge, insbesondere eine vorgegebene Anzahl, neu erstellter Protokollzeilen eines jeweiligen Ereignistyps erstellt wurde, überprüft wird, ob die Wertelisten der einzelnen Token, denen die Teilzeichenketten der Abfolge an neu erstellten Protokollzeilen zugehören, den Datentypen und/oder Verteilungstypen des entsprechenden Tokens des jeweiligen Ereignistyps entsprechen und
- dass ein anomaler Betriebszustand des Computersystems erkannt wird, wenn eine Werteliste zumindest eines Tokens nicht den Eigenschaften des, dem jeweiligen Token des Ereignistyps, zugeordneten Datentyps und/oder Verteilungstyps entspricht.

Mit dieser Vorgehensweise ist es besonders zuverlässig möglich, die Muster der angenommenen Werte der Teilzeichenketten der Protokollzeilen der üblicherweise, d.h. im Fall, dass keine Angriffe oder Veränderungen des Computersystems vorliegen, auf dem Computersystem erstellten Protokollzeilen, zu identifizieren, sodass besonders rasch und zuverlässig neu erstellte Protokollzeilen darauf überprüft werden können, ob diese dem Muster entsprechen und im Falle des nicht Entsprechens als Anomalien des Computersystems erkannt werden.

Im Folgenden wird unter einer Logdatei eine Datei verstanden, welche eine sequenzielle zeilenweise Aufzeichnung von Ereignissen des Betriebssystems, oder eines Programmes in Form von Protokollzeilen beinhaltet. Diese Aufzeichnungen können Anmerkungen, Warnungen, System- oder Fehlermeldungen der Prozesse, die auf dem System ablaufen, beschreiben. Abhängig davon, welche Prozesse in der Logdatei protokolliert werden, können sich die Protokollzeilen stark in ihrer Struktur, ihrem Inhalt und ihrem Detailgrad unterscheiden.

Protokollzeilen werden von einem Logprogramm erstellt, welches Protokollnachrichten in Form einer Zeichenabfolge erstellt, die einer gewissen Syntax entsprechend aufgebaut sind. Die Syntax ist hierbei im Hinblick auf den Aufbau der Protokollzeile, vergleichbar mit dem Satzbau in der Sprache, zu verstehen, wobei die Syntax das Zusammenfügen von Wörtern bzw. Wortgruppen zu ganzen Protokollzeilen, bzw. Sätzen, beschreibt. Es sind daher Teilzeichenabfolgen, die durch vorgegebene Trennzeichen (Separatoren), wie zum Beispiel Leerzeichen, Kommas und Strichpunkte, voneinander getrennt werden.

Basierend auf dieser Syntax können Protokollzeilen in verschiedene Klassen eingeteilt werden. Protokollzeilen einer bestimmten Klasse unterscheiden sich nur an Stellen, an denen variable Zeichenabfolgen eingefügt wurden. Diese Klassen werden auch als Ereignistypen bezeichnet. Zu den Ereignistypen können Templates, bestehend aus Token, erstellt werden.

Token bezeichnen Teile eines Templates. Sie entsprechen einer Beschreibung von Teilzeichenabfolgen in Protokollzeilen dieses Ereignistyps, die durch Separieren der Zeichenabfolge an vorgegebenen Trennzeichen, wie zum Beispiel Leerzeichen oder Beistrichen etc. entstehen. Jeder Ereignistyp lässt sich daher durch ein Template, bestehend aus einer Abfolge von Token, beschreiben. Diese Templates bestehen aus Token (den sogenannten statischen Token) mit statischem Text, der in allen Protokollzeilen, die dem Ereignistyp entsprechen, an derselben Stelle steht, und aus Token (den sogenannten variablen Token), an Stellen an denen die Protokollzeilen variable Teilzeichenabfolgen beinhalten, die durch sogenannte Wildcards gekennzeichnet werden können.

Im Folgenden werden die Begriffe "Token des Templates zu einem Ereignistyp" und "Token eines Ereignistyps" synonym verwendet.

Im Folgenden wird die betrachtete Abfolge von Protokollzeilen als Stichprobe bezeichnet. Die Werteliste eines Tokens bezeichnet die Teilzeichenabfolgen der Protokollzeilen der Stichprobe zu diesem Token, d.h., die Teilzeichenabfolgen, welche die Stichprobe im betreffenden Token annimmt.

Im Folgenden werden die Begriffe "Werte des Tokens" und "Teilzeichenabfolge in der Werteliste des Tokens" synonym verwendet.

Im Folgenden wird unter dem Datentyp eines Tokens eine Beschreibung der erwarteten Eigenschaften der Werte des Tokens verstanden. Dieser kann z.B. erkannt werden, indem eine Werteliste des Tokens getestet wird, ob die Werte die Eigenschaften der Datentypen besitzen.

Im Folgenden wird unter dem Verteilungstyp eines Datentyps eine genauere Beschreibung, welche den zugeordneten Datentyp weiter spezifiziert, verstanden. Nicht alle Datentypen besitzen oder benötigen solch eine Spezifizierung des Datentyps. In den Ausführungsbeispielen besitzen z.B. die diskreten und kontinuierlichen Datentypen einen Verteilungstyp, welche der angenommenen Verteilung der Wertemenge entspricht.

Im Folgenden wird unter "die Werte eines Tokens entsprechen nicht dem Datentyp" verstanden, dass die Werte nicht die im Datentyp des Tokens beschriebenen Eigenschaften besitzen.

Im Folgenden ist unter dem Datentyp "chronologisch" zu verstehen, dass die Werte des Tokens die Struktur eines Zeitstempels besitzen. Die Aufgabe von Zeitstempeln ist es, Zeitpunkte zu definieren.

Im Folgenden ist unter dem Datentyp "aufsteigend" zu verstehen, dass die Werte des Tokens kleiner oder gleich dem Wert des Tokens in der jeweils nachfolgenden Protokollzeile sind.

Im Folgenden ist unter dem Datentyp "absteigend" zu verstehen, dass die Werte des Tokens größer oder gleich dem Wert des Tokens in der jeweils nachfolgenden Protokollzeile sind.

Im Folgenden ist unter dem Datentyp "statisch" zu verstehen, dass es einen Wert gibt, der für alle Protokollzeilen der Wert des Tokens ist.

Im Folgenden ist unter dem Datentyp "einzigartig" zu verstehen, dass die Werte des Tokens aller Protokollzeilen unterschiedlich sind.

Im Folgenden ist unter dem Datentyp "diskret/kategorisch" zu verstehen, dass die Werte eines Tokens einer diskreten Verteilung folgen.

Im Folgenden ist unter dem Datentyp "kontinuierlich" zu verstehen, dass die Werte eines Tokens einer kontinuierlichen Verteilung folgen.

Im Folgenden ist unter dem Datentyp "sonstig" zu verstehen, dass keiner der getesteten Datentypen zu den Werten des Tokens passt.

Im Folgenden wird unter dem normalen Betriebszustand eines Computersystems verstanden, dass das System bei gleichbleibenden Nutzerverhalten, äußeren Einflüssen und ohne Manipulation der intern ablaufenden Prozesse ausgeführt wird. Da Protokolldateien Informationen über Ereignisse und Abläufe von Prozessen eines Systems enthalten, können diese dazu genutzt werden, um Muster im Auftreten und in den Eigenschaften der Ereignisse zu finden.

Muster können entdeckt werden, indem Protokolldateien, welche während eines normalen Betriebszustandes entstanden sind, über längere Zeit hinweg analysiert werden. Die Art von Mustern, welche in diesem Patent betrachtet werden, sind Muster in den Eigenschaften der Ereignisse. Dazu werden die Werte der Token verglichen und überprüft ob diese gewisse Eigenschaften besitzen.

Unter normalem Betriebszustand treten diese Muster in den neu erzeugten Protokolldateien wieder auf, sodass man von einem Abweichen vom normalen Systemverhaltens spricht, sollte das Muster nicht mehr in neu erzeugten Protokollzeilen fortgeführt werden.

Im Folgenden wird unter einem anomalen Betriebszustand eines Computersystems ein Zustand des Computersystems verstanden, der nicht der normalen Benutzung des Systems entspricht. Dies kann aus einer Veränderung des Nutzerverhaltens, Änderungen äußerer Einflüsse und/oder einer Manipulation der intern ablaufenden Prozesse entstehen.

Da Systeme unter anomalen Betriebszuständen i.d.R. eine Änderung in der Abfolge und Eigenschaften der Ereignisse verursachen, kann dies auch in den Protokolldateien erkannt werden. Eine mögliche Ausprägung dieser Veränderungen ist es, dass die im Abschnitt zum normalen Betriebszustand beschriebenen Muster, nicht mehr in neu erstellten Protokollzeilen vorhanden sind. Da Protokollzeilen, welche unter normalem Betriebszustand generiert wurden diesen Mustern folgen, kann im Umkehrschluss ein anomaler Betriebszustand erkannt werden, wenn das Muster in neu erzeugten Protokollzeilen nicht fortgeführt wird.

Die Protokollzeilen, welche von den Mustern des normalen Betriebszustandes abweichen, werden auch Anomalien genannt.

Ein erfindungsgemäßes Verfahren kann z.B. in folgenden Einsatzbereichen besonders vorteilhaft eingesetzt werden:

- Zur Bestimmung des normalen Betriebszustandes eines Computersystems und darauf aufbauender Anomalieerkennung in Computernetzwerken,
- Zur Bestimmung von anomalen Betriebszustandes eines Arbeitsprozesses im Zuge von Predictive Maintenance.

Eine besonders zeit- und rechenleistungssparende Initialisierung bzw. neuerliche Initialisierung der Datentypen wird erfindungsgemäß gewährleistet, wenn im Rahmen des sequenziellen Testablaufs die einzelnen Wertelisten der Token in folgender Reihenfolge getestet werden:

- auf das Vorliegen des chronologischen Datentyps, indem überprüft wird, ob die einzelnen Werte der Werteliste eine vorgegebene Struktur aufweisen,

- auf das Vorliegen des statischen Datentyps, indem überprüft wird, ob alle Werte der Werteliste gleich dem ersten Wert der Liste sind,
- auf das Vorliegen des auf- oder absteigenden Datentyps, indem zunächst überprüft wird, ob alle Werte der Werteliste numerische Werte sind und anschließend überprüft wird,

    o ob die Werte der Werteliste jeweils größer oder gleich dem entsprechenden Wert der jeweils zeitlich vorangehenden erstellten Protokollzeile und somit aufsteigend sind oder
    o ob die Werte jeweils kleiner oder gleich dem entsprechenden Wert der jeweils zeitlich vorangehenden erstellten Protokollzeile und somit absteigend sind,

- auf das Vorliegen eines kontinuierlichen Datentyps, indem zunächst getestet wird, ob die einzelnen Werte der Werteliste numerische Werte sind, und vorzugsweise wie viele Werte einzigartig in der Stichprobe sind, und anschließend auf die Zugehörigkeit zu vorgegebenen Verteilungstypen oder Verteilungsfamilien getestet wird,
- auf das Vorliegen des einzigartigen Datentyps, indem überprüft wird, ob die einzelnen Werte der Werteliste jeweils einzigartig in der Werteliste sind,
- auf das Vorliegen des diskreten Datentyps, indem überprüft wird, ob die Anzahl der einzigartigen Werte der Werteliste einen vorgegebenen Schwellenwert unterschreitet.

Um eine besonders zuverlässige Überprüfung auf Zugehörigkeit einer Wertliste zu einem bestimmten Verteilungstyp gewährleisten zu können, kann vorgesehen sein, dass die einzelnen Wertelisten der Token im Rahmen des Tests auf einen kontinuierlichen Datentyp mit einem goodness of fit-Test, insbesondere mit einem Kolmogorov-Smirnov-Test, auf das Vorliegen ausgewählter Verteilungstypen und Verteilungsfamilien getestet werden,
wobei im Fall, dass bei der jeweiligen Werteliste der Test auf Zugehörigkeit für zumindest einen Verteilungstyp positiv ausfällt, der jeweilige Verteilungstyp dem Token zugeordnet wird.
Um im Fall, dass sich der Verteilungstyp eines Tokens ändert, besonders rasch und zuverlässig den geänderten Verteilungstyp zuordnen zu können, kann vorgesehen sein, dass

- im Fall, dass bei der jeweiligen Werteliste der Test auf Zugehörigkeit für mehrere Verteilungstypen positiv ausfällt, dem Token demjenigen derjenige Verteilungstyp zugeordnet wird, der den höchsten p-Wert aufweist und die restlichen Verteilungstypen für den Token hinterlegt werden, und/oder
- im Fall, dass der Test auf Zugehörigkeit für keinen der getesteten Verteilungstypen positiv ausfällt, der kontinuierliche Datentyp mit der empirischen Verteilungsfunktion der Wertemenge als Verteilungstyp für den jeweiligen Token hinterlegt wird.

Um eine besonders zuverlässige Überprüfung auf Zugehörigkeit der Werteliste eines Tokens zu einer bestimmten Verteilungsfamilie gewährleisten zu können, kann vorgesehen sein, dass die einzelnen Wertelisten der Token im Rahmen des Tests auf einen kontinuierlichen Datentyp auf das Vorliegen ausgewählter Verteilungsfamilien getestet werden,
wobei zunächst die Parameter, insbesondere Lage-, Skalen- und/oder Formparameter, der jeweiligen Verteilungsfamilie geschätzt werden und anschließend der goodness of fit-Test, insbesondere der Kolmogorov-Smirnov-Test, auf die Zugehörigkeit zur der mit den geschätzten Parametern spezifizierten Verteilungsfamilie durchgeführt wird.
Eine besonders zeit- und rechenleistungssparende Überprüfung, ob die Wertemenge eines Tokens, dem jeweils zugeordneten Datentyp und/oder Verteilungstyp des jeweiligen Tokens des jeweiligen Ereignistyps entspricht, kann gewährleistet werden, wenn für die Überprüfung, ob die Werteliste eines Tokens dem, dem jeweiligen Token zugeordneten, Datentyp und/oder Verteilungstyp angehört, ein, insbesondere modifizierter, Kolmogorov-Smirnov-Test für den kontinuierlichen und/oder ein Multinomialtest für den diskreten Datentyp angewendet wird.
Um besonders vorteilhaft berücksichtigen zu können, dass sich der Datentyp eines oder mehrerer Token eines Ereignistyps ändern kann, kann vorgesehen sein, dass,

    wenn die Werteliste eines Tokens nicht dem, dem jeweiligen Token zugeordneten, Datentyp und/oder Verteilungstyp entspricht, für den Datentyp und/oder den Verteilungstyp des Tokens eine neuerliche Initialisierung gemäß Anspruch 2, durchgeführt wird,
    wobei insbesondere vorgesehen ist, dass für Token, denen der sonstige Datentyp zugewiesen wurde, eine neuerliche Initialisierung, insbesondere unmittelbar oder nach einer vorgegebenen Anzahl an aufeinanderfolgenden Updateschritten, vorzugsweise gemäß Anspruch 2, durchgeführt wird.

Gemäß einer vorteilhaften Ausführungsform eines erfindungsgemäßen Verfahrens kann vorgesehen sein, dass, wenn die Werteliste eines Tokens nicht dem, dem jeweiligen Token zugeordneten, Datentyp und/oder Verteilungstyp entspricht, dem jeweiligen Token der sonstige Datentyp zugeordnet wird.

Eine besonders rasche neuerliche Initialisierung der Datentypen im Zuge eines Updateschritts eines Tokens kann erzielt werden,

- wenn die Werteliste eines Tokens nicht mehr dem, dem jeweiligen Token zugewiesenen, statischen Datentyp entspricht, dem Token der diskrete Datentyp zugeordnet wird, und/oder
- im Fall, dass bei der Initialisierung des Datentyps eines Tokens im Rahmen des Tests auf einen kontinuierlichen Datentyp für den Token mehrere Verteilungstypen hinterlegt wurden, die Werteliste des jeweiligen Tokens auf deren Zugehörigkeit zu einem der restlichen hinterlegten Verteilungstypen getestet wird, wenn die Werteliste des jeweiligen Tokens nicht mehr dem zuvor vorliegenden Verteilungstyp entspricht.

Um besonders effizient zu vermeiden, dass der Datentyp, eines oder mehrerer Token eines Ereignistyps auf Grundlage der Werte der Werteliste einer einzelnen Stichprobe verworfen wird, obwohl die Werte einer einzelnen Stichprobe potentiell eine Anomalie darstellen können, kann vorgesehen sein, dass bei einem Updateschritt der Datentyp eines Tokens erst geändert wird, wenn wiederholt festgestellt wird, dass der Test auf Vorliegen des, dem Token aktuell zugeordneten, Datentyps im Updateschritt negativ ausfällt.

Um besonders effektiv zu vermeiden, dass bei einer Überprüfung auf Zugehörigkeit zum einzigartigen Datentyp eine zu große Menge an Werten mit den einzelnen Werten einer Wertemenge verglichen werden muss, kann vorgesehen sein, dass bei einem Updateschritt der Datentypen einzelner Token, denen der einzigartige Datentyp zugeordnet wurde, beim Test, ob die Werteliste des jeweiligen Tokens, dem einzigartigen Datentyp entspricht, nur die Werte einer vorgegebenen Anzahl zeitlich vorangehender Protokollzeilenberücksichtigt werden.

Um besonders effizient Anomalien im Betriebszustand eines Computersystems erkennen zu können, kann bei einem erfindungsgemäßen Verfahren vorgesehen sein, dass Token-Indikatoren für die einzelnen Token des Templates eines Ereignistyps basierend auf einer Liste der, dem jeweiligen Token jeweils zuletzt zugeordneten, Datentyp und/oder Verteilungstyp ermittelt werden, wobei die Token-Indikatoren die Wahrscheinlichkeit dafür angeben, dass eine Veränderung im Verhalten bei der Zuordnung des Datentyps und/oder Verteilungstyps des jeweiligen Tokens des Ereignistyps aufgetreten ist.

Um besonders effizient Anomalien im Betriebszustand eines Computersystems erkennen zu können, kann bei einem erfindungsgemäßen Verfahren weiters vorgesehen sein, dass auf Grundlage der einzelnen Token-Indikatoren der Token eines Ereignistyps ein Ereignistyp-Indikator für diesen Ereignistyp ermittelt wird, wobei der Ereignistyp-Indikator die Wahrscheinlichkeit dafür angibt, dass eine Veränderung im Verhalten der Protokollzeilen des jeweiligen Ereignistyps aufgetreten ist.

Um bei der Ermittlung des Ereignistyp-Indikators einen zu starken Einfluss von Token, deren Datentyp sich besonders häufig ändert, zu vermeiden, kann vorgesehen sein, dass bei der Ermittlung des Token-Indikators und/oder Ereignistyp-Indikators des jeweiligen Ereignistyps die Token-Indikatoren der einzelnen Token gewichtet berücksichtigt werden, wobei die Token-Indikatoren derjenigen Token stärker gewichtet werden, die eine geringere Wahrscheinlichkeit für eine Veränderung aufweisen.

Um zu vermeiden, dass Token, deren Datentyp sich besonders häufig ändert, zur Anomalieerkennung herangezogen werden, kann vorgesehen sein, dass Token, die, insbesondere regelmäßig, einen Token-Indikator mit einem Wert nahe bei 1 aufweisen, bei einem Updateschritt der Datentypen, unberücksichtigt bleiben.

Um weiter Rechenzeit und Rechenleistung einzusparen, kann bei einem erfindungsgemäßen Verfahren vorgesehen sein, dass nur für ausgewählte, insbesondere die variablen, Token eines jeweiligen Ereignistyps analysiert wird, ob die Werteliste des jeweiligen Tokens dem, dem jeweiligen Token aktuell zugeordneten Datentyp und/oder Verteilungstyp entspricht, wobei insbesondere vorgesehen ist, dass vorab bekannt ist, welche Token eines Ereignistyps statische und/oder variable Token sind.

Ein Programm zur Durchführung eines Verfahrens kann vorteilhafterweise auf einem Datenträger abgespeichert und derart mobil sein.

Weitere Vorteile und Ausgestaltungen der Erfindung ergeben sich aus der Beschreibung und den beiliegenden Zeichnungen.

Beispielhafte Ausführungsformen der Erfindung sind in den Zeichnungen schematisch dargestellt und werden im Folgenden unter Bezugnahme auf die Zeichnungen beispielhaft beschrieben.

Im Folgenden zeigen schematisch:

Fig. 1 eine schematische Darstellung eines erfindungsgemäßen Verfahrens mit den erforderlichen, sowie optionalen Verfahrensschritten,

Fig. 2 eine schematische Darstellung des sequentiellen Testablaufs eines erfindungsgemäßen Verfahrens,

Fig. 3 ein Ausführungsbeispiel für einen Updateschritt der Datentypen eines Tokens, sollten die Werte des Tokens nicht dem Datentyp entsprechen.

Viele Computersysteme erlauben keinen direkten Einblick in die laufenden Prozesse, stellen jedoch eine Logdatei zur Verfügung. Diese Logdatei kann genutzt werden um zu schlussfolgern, welche Ereignisse in Folge des Ablaufs eines Prozesses aufgetreten sind.

Wie bereits zuvor erwähnt, sind von einem Protokollprogramm in Form einer Zeichenabfolge erstllte Proto-kollzeilen in einer Logdatei einer gewissen Syntax entsprechend aufgebaut und können durch Separieren der Zeichenabfolgen an vorgegebenen Trennzeichen, wie zum Beispiel Leerzeichen oder Beistrichen in Teilzeichenabfolgen unterteilt werden.

Tabelle 1 zeigt ein Beispiel von Protokollzeilen eines Ereignistyps mit dem zugehörigen Template in der ersten Zeile, den einzelnen Teilzeichenabfolgen der Protokollzeilen und den, dem jeweiligen Token T zugeordneten, Datentypen DT in der siebenten Zeile:

Tabelle 1: Beispiel eines Templates mit zugehörigen Protokollzeilen und Datentypen

| § | CPU temp= | § | , | § | fan freq |
|---|---|---|---|---|---|
| Jul-17-11:30:18 | CPU temp= | 43.62 | , | decreasing | fan freq |
| Jul-17-11:32:27 | CPU temp= | 56.25 | , | decreasing | fan freq |
| Jul-17-11:33:22 | CPU temp= | 64.42 | , | increasing | fan freq |
| Jul-17-11:35:58 | CPU temp= | 66.54 | , | decreasing | fan freq |
| Jul-17-11:36:43 | CPU temp= | 61.81 | , | increasing | fan freq |
| chronologisch | statisch | kontinuierlich | statisch | diskret | statisch |

Da z.B. Angriffe auf Computersysteme die Systemabläufe i.d.R. verändern, können diese Veränderungen auch in der Logdatei erkannt werden. Treten in einer Logdatei Protokollzeilen auf, die sich von den erwarteten Protokollzeilen unterscheiden, deuten diese auf Anomalien hin. Anomalien können in Logdateien ermittelt werden, indem die Logdateien des Computersystems unter Normalbetrieb, über längere Zeit, auf Muster hin analysiert werden und anschließend im nachfolgenden Betrieb beobachtet wird, ob diese Muster weiter bestehen. Sollten Inhalte der Logdateien die Muster nicht fortführen, werden diese Inhalte als Anomalien erkannt. Aus diesem Grund können auf Grundlage von Logdateien anhand des erfindungsgemäßen Verfahrens, Anomalien besonders zuverlässig und rasch erkannt werden.

Wie bereits zuvor erwähnt, können die Protokollzeilen basierend auf deren Syntax in verschiedene Klassen eingeteilt werden. Protokollzeilen einer bestimmten Klasse unterscheiden sich nur an Stellen, an denen variable Zeichenabfolgen eingefügt wurden. Diese Klassen werden auch als Ereignistypen bezeichnet.

Voraussetzung für die Erkennung von Anomalien gemäß einem erfindungsgemäßen Verfahren ist, dass den einzelnen Protokollzeilen zunächst basierend auf deren Syntax, insbesondere aufgrund der Ähnlichkeit der einzelnen Protokollzeilen zueinander und der die Protokollzeilen aufbauenden Teilzeichenabfolgen, jeweils zumindest ein Ereignistyp zugewiesen wird.

Aus dem Stand der Technik sind verschiedenste Vorgehensweisen bekannt, wie jeder Protokollzeile basierend auf deren Syntax ein Ereignistyp oder ggf. mehrere Ereignistypen zugewiesen werden können. Beispiele hierfür sind:

1. Ein Parser der mittels eines Parsergenerators (siehe EP19169705.1, A50461/2018) erstellt wurde, kann dazu genutzt werden, um den einzelnen Protokollzeilen einen Ereignistyp zuzuordnen. Allerdings fehlt dem Parser die Möglichkeit die Werte einzelner Token T zu analysieren.

Protokollzeilen werden zunächst nach ihrer Ähnlichkeit geclustert (siehe EP3267625, A50601/2016) Daher entsprechen alle Protokollzeilen, die demselben Cluster zugeordnet wurden einem Ereignistyp. Allerdings fehlt dem Clustering die Möglichkeit die Werte einzelner Token T zu analysieren.

Weitere Voraussetzung für das erfindungsgemäße Verfahren ist, dass anschließend für jeden Ereignistyp ein Template umfassend eine Anzahl von Token, erstellt wird, indem die einzelnen Protokollzeilen an vorgegebenen Trennzeichen in Teilzeichenabfolgen unterteilt werden.

Wie bereits zuvor erwähnt, bezeichnen Teilzeichenabfolgen die einzelnen Teile einer Protokollzeile, die durch Separieren der Zeichenabfolge an vorgegebenen Trennzeichen, wie zum Beispiel Leerzeichen oder Beistrichen etc. entstehen. Diese können durch Tokens repräsentiert werden. Jeder Ereignistyp lässt sich daher durch ein Template, bestehend aus einer Abfolge von Token, beschreiben.

Das Template beschreibt somit die Struktur, d.h. die Abfolge der Teilzeichenabfolgen, der zugeordneten Protokollzeilen, und weist eine Anzahl von statischen Token, die nur einen Wert in allen Protokollzeilen besitzen, auf, die in ihrer Reihenfolge in allen Protokollzeilen des jeweiligen Ereignistyps vorhanden sind, und durch variable Token, die mindestens zwei Werte in den Protokollzeilen annehmen können, unterbrochen werden.

D.h. die Templates bestehen aus statischen Token, z.B. statischem Text, der in allen Protokollzeilen, die dem Ereignistyp entsprechen an derselben Stelle steht, und aus varaiblen Token, z.B. variablem Text, die durch sogenannte Wildcards gekennzeichnet sein können, die an Stellen eingefügt werden, an denen die Zeilen variable Werte beinhalten.

Die einzelnen ermittelten Templates und deren Token T sind charakteristisch für die Protokolldatei. Da die Werte der Token T Auskunft über die Prozesse des protokollieren Systems geben, können aus den Verteilungen der Werte der Token T Rückschlüsse auf das Systemverhalten gezogen werden.

Für eine derartige Unterteilung der einzelnen Protokollzeilen an vorgegebenen Trennzeichen in Teilzeichenabfolgen bzw. eine derartige Tokenisierung der einzelnen Protokollzeilen sind aus dem Stand der Technik ebenfalls verschiedenste Vorgehensweisen bekannt, wie z.B.

1. Es besteht die Möglichkeit aus einem durch einen mittels eines Parsergenerators (siehe EP19169705.1, A50461/2018) erstellten Parserbaums, Templates für die jeweiligen Ereignistypen zu generieren, indem man die Token T der Knoten entlang eines Pfades des Parserbaums aneinanderfügt. Da der Parserbaum sowohl statische als auch variable Token T enthält, erhält man ein Template, das aus statischen und variablen Token T besteht. Die vorliegende Erfindung kann nun dazu genutzt werden, um die Werte der als variabel erkannten Token T zu analysieren. Diese Funktionalität fehlt dem Parsergenerator und dem Parser.

2. Ein Templategenerator (siehe A50285/2019, EP20160854.4) kann genutzt werden um nachdem ein Clustering durchgeführt wurde, für jeden Cluster bzw. Ereignistyp ein Template zu erstellen, das aus statischen und variablen Token T besteht. Die vorliegende Erfindung kann nun dazu genutzt werden, um die Werte der als variabel erkannten Token T zu analysieren. Diese Funktionalität fehlt sowohl dem Clustering als auch dem Templategenerator.

Im Folgenden wird das erfindungsgemäße Verfahren zur Detektion von anomalen Betriebszuständen eines Computersystems zunächst allgemein beschrieben:

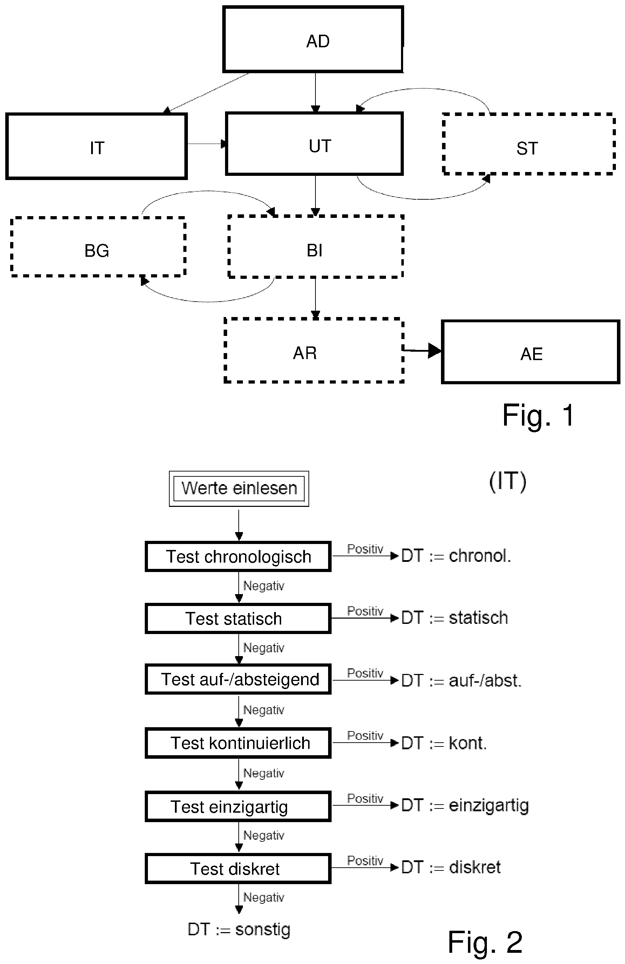

Generell umfasst ein erfindungsgemäßes Verfahren stets folgende Schritte (siehe Fig. 1, durchgehende Umrandung):

1. Zunächst werden die Daten (bezeichnet mit Aufbereitung der Daten "AD" in Fig. 1) bzw. Protokollzeilen aufbereitet. In diesem **Aufbereitungs-Schritt** werden die Protokollzeilen in Teilzeichenabfolgen unterteilt und jeder Protokollzeile wird ein Ereignistyp zugeordnet, wie dies z.B. in Wurzenberger, M., Landauer, M., Skopik, F., & Kastner, W. (2019, April). AECID-PG: A Tree-Based Log Parser Generator To Enable Log Analysis. In 2019 IFIP/IEEE Symposium on Integrated Network and Service Management (IM) (pp. 7-12). *IEEE.* beschrieben ist. Die einzelnen Teilzeichenabfolgen werden für die folgenden Analysen in Wertelisten zu den einzelnen Token T gespeichert.

Anschließend werden folgende Schritte jeweils für die Protokollzeilen der einzelnen Ereignistypen separat durchgeführt, d.h. bei jeder Ausführung der im Folgenden beschriebenen Schritte werden nur Protokollzeilen eines Ereignistyps verarbeitet.

2. **Initialisierung IT der Datentypen DT der Token T der Ereignistypen** (bezeichnet mit Initialisierung der Datentypen "IT" in Fig. 1): In diesem Schritt werden den Token T Datentypen DT initial zugeordnet. Das initiale Zuordnen erfolgt, nachdem eine vordefinierte Anzahl, beispielsweise vom Nutzer vorgegebene Anzahl, an Protokollzeilen des Ereignistyps beobachtet und, wie oben beschrieben, in Teilzeichenabfolgen unterteilt wurden.

Auf Grundlage dieser Stichprobe mit einer vorgegebenen Anzahl bzw. einer Vielzahl von Protokollzeilen erfolgt die Zuordnung des Datentyps DT zu den einzelnen Token T mit einem sequenziellen Testablauf. Im gezeigten Ausführungsbeispiel werden die einzelnen Wertemengen der Token T auf deren Zugehörigkeit zu einem oder mehreren der folgenden Datentypen DT getestet: chronologisch, aufsteigend, absteigend, statisch, einzigartig, diskret/kategorisch, kontinuierlich und sonstig.

Fällt bei einem Token T keiner der Tests des Testablaufs positiv aus, wird bei der Initialisierung IT der Datentyp DT des betreffenden Tokens als sonstiger Datentyp festgelegt. Die Tests zu den Datentypen DT testen mit der Nullhypothese, dass die Werte die Eigenschaft des Datentyps DT besitzen und der Alternativhypothese, dass sie die Eigenschaft nicht besitzen.

Bei der Initialisierung IT der Datentypen DT der einzelnen Ereignistypen wird im Rahmen eines sequentiellen Testablaufs die Werteliste des Tokens auf ihre Zugehörigkeit zu ausgewählten Datentypen DT und/oder Verteilungstypen getestet. Fällt bei der jeweiligen Werteliste des Tokens einer der Tests des Testablaufs negativ aus, wird der betroffene Token T auf deren Zugehörigkeit zum im Testablauf nächstfolgendem Datentyp DT getestet. Sollte einer der Tests positiv sein, wird dem Token T der zugehörige Datentyp DT, insbesondere mitsamt des gefundenen Verteilungstyps, zugeordnet und der Testablauf wird beendet, womit die nachfolgenden Tests nicht mehr ausgeführt werden. Die Initialisierung kann insbesondere in der in Fig. 2 angegebenen Reihenfolge mit den im Folgenden beschriebenen Datentypen DT getestet werden:

Der sequenzielle Testablauf des ersten Ausführungsbeispiels ist schematisch in Fig. 2 abgebildet und kann in dieser Reihenfolge für die einzelnen Token, mit Hilfe der Werteliste des Tokens, durchgeführt.

Die Tests auf die einzelnen Datentypen DT können dabei beispielsweise wie im Folgenden und weiter unten im Zusammenhang mit dem ersten Ausführungsbeispiel beschrieben ablaufen:

- Auf das Vorliegen des chronologischen Datentyps kann z.B. getestet werden, indem überprüft wird, ob die Werte der Wertemenge des Tokens eine vorgegebene Struktur aufweisen.

- Auf das Vorliegen des statischen Datentyps kann z.B. getestet werden, indem überprüft wird, ob alle Werte der Wertemenge des Tokens der Stichprobe gleich dem ersten Wert der Wertemenge des Tokens der Stichprobe sind.

- Auf das Vorliegen des auf- oder absteigender Datentyps kann z.B. getestet werden, indem überprüft wird, ob alle Werte der Wertemenge des Tokens numerische Werte sind und ob die Werte der Werteliste zu dem Token T jeweils größer oder gleich dem entsprechenden Wert zu der jeweils zeitlich vorangehend erstellten Protokollzeile und somit aufsteigend sind oder ob jeder Wert jeweils kleiner oder gleich dem entsprechenden Wert der jeweils zeitlich vorangehend erstellten Protokollzeile und somit absteigend sind.

- Auf das Vorliegen eines kontinuierlichen Datentyps kann z.B. getestet werden, indem zunächst getestet wird, ob die einzelnen Werte einer Werteliste eines Tokens numerische Werte sind, und vorzugsweise wie viele Werte einzigartig in der Werteliste sind, und anschließend auf die Zugehörigkeit zu vorgegebenen Verteilungen oder Verteilungsfamilien getestet wird.

Der Test auf kontinuierliche Datentypen kann z.B. auf Zugehörigkeit zu prominenten/ausgewählten Verteilungen erfolgen. Bei diesem Test kommen z.B. goodness of fit Tests (siehe z.B. Zhang, J. (2002). Powerfulgoodness-of-fit tests based on the likelihood ratio. Journal of the Royal Statistical Society: Series B (Statistical Methodology), 64(2), 281-294), insbesondere Kolmogorov-Smirnov(KS)-Tests (siehe z.B. Knuth, D. E. (2014). Art of computer programming, volume 2: Seminumerical algorithms. Addison-Wesley Professional), zum Einsatz.

Passt die Werteliste eines Tokens zu mindestens einer Verteilung, kann die Verteilung mit dem größten p-Wert gespeichert werden. Dies bedeutet, im Fall, dass bei der Werteliste der Test auf Zugehörigkeit für mehrere Verteilungstypen positiv ausfällt, wird einer der Verteilungstypen als Datentyp zugeordnet und optional die restlichen Verteilungstypen hinterlegt. Beispielsweise kann derjenige Verteilungstyp zugeordnet werden, der den höchsten p-Wert aufweist.

Im Fall, dass der Test auf Zugehörigkeit für keine der getesteten Verteilungen positiv ausfällt, kann optional die empirische Verteilungsfunktion der Werteliste als Verteilungstyp hinterlegt werden. Sollte also keine der gewählten Verteilungen passen, kann der kontinuierliche Datentyp mit der empirische Verteilungsfunktion der Werteliste als Verteilungstyp des Tokens gespeichert werden.

Unter dem p-Wert ist hier, einfach gesagt, ein Maß für die Glaubwürdigkeit der Nullhypothese, oder der Annahme, die getroffen wurde, zu verstehen. Der p-Wert ist abhängig vom gewählten Test und ist deshalb nicht ein eindeutiger Wert. Im später angeführten Ausführungsbeispiel sind die Nullhypothesen jeweils, dass die Werte Multinomial (diskret), Normal, Uniform, etc. verteilt sind. Der p-Wert gibt dabei an, wie gut die Werte zu der Verteilung passen.

Wenn zum Beispiel eine Variable mit diskretem Datentyp und einer Verteilung von ["True": 80%; "False": 20%] beobachtet wird und im Updateschritt fast alle Werte "False" wären, würde das einen geringen p-Wert ergeben, da es sehr unwahrscheinlich ist, dass solch eine Stichprobe gezogen wird, wenn die Werte wirklich ["True": 80%; "False": 20%]-verteilt wären.

Dies trifft auch auf den kontinuierlichen Datentyp zu, wobei hier die Berechnung weniger anschaulich, aber vom Prinzip her gleich ist. Eine Stichprobe, deren Werte ähnlich einer bestimmten Verteilung verteilt sind, erhält einen hohen p-Wert und eine Stichprobe, deren Werte nicht zur Verteilung passen, erhält einen geringen p-Wert.

Optional kann anstatt auf ausgewählte Verteilungen auch auf ausgewählte Verteilungsfamilien getestet werden. Dabei werden zuerst die Parameter der Verteilungsfamilien geschätzt und danach ein goodness of fit-Test, z.B. der Kolmogorov-Smirnov-Test, auf die Zugehörigkeit zu der mit den geschätzten Parametern spezifizierten Verteilungsfamilie durchgeführt. Bei diesen Parametern kann es sich z.B. um Lage-, Skalen- und/oder Formparameter handeln. Diese Parameter hängen von der jeweiligen Verteilungsfamilie ab. Die Familie der Normalverteilungen besitzt zum Beispiel einen Lage- und einen Skalenparameter, während die Familie der Betaverteilungen zwei Formparameter besitzt.

Die kritischen Werte von goodness of fit-Tests beziehen sich meist auf das Testen einer Stichprobe gegen eine komplett spezifizierte Verteilung und können nicht direkt übernommen werden.

Die kritischen Werte/Distanzen bei den goodness of fit-Tests legen fest, wann eine Stichprobe zu einer Verteilung passt und ab wann es zu unwahrscheinlich ist. Beim KS-Test gibt es die kritischen Distanzen in tabellierter Form, wobei sich diese Werte auf den Test auf eine bestimmte Verteilung beziehen. Sobald ein Parameter geschätzt wird, müssen die kritischen Distanzen neu berechnet werden.

Da bei einem Test auf ausgewählte Verteilungsfamilien erfindungsgemäß aber zuerst Parameter geschätzt werden, müssen die kritischen Werte der goodness of fit-Tests angepasst werden, um die Schätzung der Parameter auszugleichen. Hier sei noch darauf hingewiesen, dass die kritischen Werte nicht nur von der Anzahl der geschätzten Parameter abhängen kann, sondern auch von der Art der Parameter und der Verteilungsfamilie.

Die kritischen Werte können für ausgewählte goodness of fit-Tests, Verteilungsfamilien, Parameter und Stichprobengrößen aus bereitgestellten Tabellen übernommen werden, wie sie aus z.B. Razali, N. M., & Wah, Y. B. (2011). Power comparisons of shapiro-wilk, kolmogorov-smirnov, lilliefors and anderson-darling tests. Journal of statistical modeling and analytics, 2(1), 21-33 und Lilliefors, H. W. (1969). On the Kolmogorov-Smirnov test for the exponential distribution with mean unknown. Journal of the American Statistical Association, 64(325), 387-389, bekannt sind. Die kritischen Werte werden mit Monte-Carlo-Methoden (siehe z.B. Lapeyre, B. (2007). Introduction to Monte-Carlo Methods. Lecture, Halmstad, Sweden, 2-4) ermittelt und für die spätere Benutzung in Listen gespeichert.

- Auf das Vorliegen des einzigartigen Datentyps kann z.B. getestet werden, indem überprüft wird, ob die einzelnen Werte der Werteliste des Tokens jeweils einzigartig in der Werteliste sind.

- Auf das Vorliegen des diskreten Datentyps kann z.B. getestet werden, indem überprüft wird, ob die Anzahl der einzigartigen Werte der Werteliste des Tokens einen vorgegebenen Schwellenwert unterschreitet.

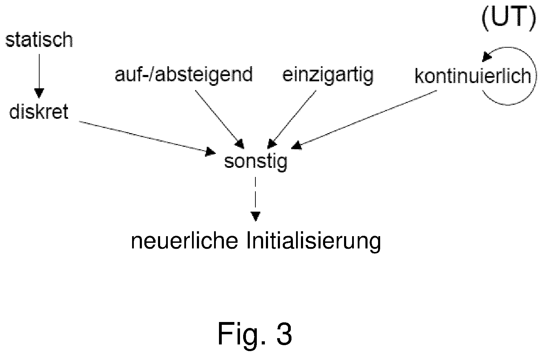

3. **Update UT der Datentypen DT der Token T** (bezeichnet mit Update der Datentypen "UT" in Fig. 1, Fig. 3):

Nachdem die Datentypen DT den Token T initial zugeordnet wurden, wird periodisch getestet, ob die Werte der Token T der neu eingelesenen Protokollzeilen ebenfalls diesem Datentyp DT entsprechen, oder ob der Datentyp DT nicht mehr aktuell ist. Die Ausführung des Update-Schrittes erfolgt, periodisch nachdem eine vordefinierte Anzahl, beispielsweise vom Nutzer vorgegebene Anzahl, an Protokollzeilen des Ereignistyps beobachtet und, wie im Schritt "AD" beschrieben, in Teilzeichenabfolgen unterteilt wurden.

In diesem Schritt ist die Stichprobe wieder die aktuell betrachtete Abfolge an Protokollzeilen.

Sollte der Test negativ ausfallen, wird dies im Anschluss im Schritt "AE" als Anomalie angemerkt.

Optional kann eine neuerliche Initialisierung des Datentyps DT auf Basis der neuen Stichprobe, eventuell erweitert durch vorrangegangene Stichproben, durchgeführt werden, sollte der Test zum Datentyp DT eines Tokens negativ ausfallen. Optional kann eine Anomalie eines Tokens mit einem Datentyp DT mit statistischen Test, z.B. diskreter und kontinuierlicher Datentyp, nur dann angemerkt und/oder eine neuerliche Initialisierung eines Tokens mit einem Datentyp DT mit statistischen Test, auch erst vorgenommen werden, wenn wiederholt, z.B. innerhalb einer gewissen Anzahl der letzten Beobachtungen an Tests, die Tests des Datentyps DT negativ ausfallen. Die Reihenfolge der Zuordnung der Datentypen DT, kann auch individuell auf die benutzten Datentypen angepasst werden. Das heißt, dass Token, welche gewisse Datentypen zugeordnet haben, nur auf gewisse andere Datentypen getestet werden, sollten die Werte nicht mehr dem ursprünglichen Datentyp DT entsprechen.

Bei den Tests der zugeordnete Datentypen DT wird als Nullhypothese angenommen, dass die Werteliste des zugehörigen Tokens, die für den bisher zugeordneten Datentyp DT festgelegten Eigenschaften besitzt und als Alternativhypothese, dass die Werteliste die Eigenschaft nicht besitzt.

Um häufiges neuerliches Initialisieren des Datentyps DT einzelner Token T mit Wertelisten, die Anomalien enthalten, zu vermeiden, können die neuen Datentypen DT auch erst nachdem eine bestimmte Anzahl an Protokollzeilen neu erstellt wurde, ermittelt werden bzw. dem Token T der sonstige Datentyp zugeordnet werden.

Für Token, denen zuvor der sonstige Datentyp zugewiesen wurde, kann optional eine neuerliche Initialisierung, insbesondere unmittelbar oder nach einer vorgegebenen Anzahl an aufeinanderfolgenden Updateschritten durchgeführt werden. Dies bedeutet, dass Token, denen der sonstige Datentyp zugewiesen wurde, beispielsweise immer direkt neu initialisiert werden.

Um zu entscheiden, ob die Werteliste zu einem Token, dem momentan zugeordneten Datentyp folgt, oder der Datentyp des Tokens sich geändert hat, können Tests zum Einsatz kommen, welche jeweils eine Stichprobe testen, ob sie die Eigenschaft eines Datentyps besitzt. In diesen Tests können unter anderem Kolmogorov-Smirnov-Tests für den kontinuierlichen und Multinomialtests (siehe z.B. Kusolitsch, N. (2014). Maß- und Wahrscheinlichkeitstheorie: Eine Einführung. Springer-Verlag.) für den diskreten Datentyp zur Anwendung kommen.

Die Tests auf die einzelnen Datentypen DT können dabei beispielsweise wie im Folgenden und weiter unten im Zusammenhang mit dem ersten Ausführungsbeispiel beschrieben ablaufen:

- Der Test ob die Werteliste dem chronologischen Datentyp folgt kann z.B. überprüft werden, indem die einzelnen Werte der Wertemenge die in der Initialisierung des Datentyps vorgegebene Struktur aufweisen.

- Der Test ob die Werteliste dem statischen Datentyp folgt kann z.B. überprüft werden, indem überprüft wird, ob alle Werte der Werteliste gleich dem im Datentyp hinterlegten Wert sind.

- Der Test ob die Werteliste dem auf- oder absteigender Datentyp folgt kann z.B. überprüft werden, indem überprüft wird, ob alle Werte der Werteliste numerische Werte sind und ob die Werte jeweils größer oder gleich dem vorangegangenen Wert und somit aufsteigend sind oder ob die Werte der Wertemenge jeweils kleiner oder gleich dem vorangegangenen Wert und somit absteigend sind.

- Der Test ob die Werteliste dem kontinuierlichen Datentyp folgt kann z.B. überprüft werden indem ein Kolmogorov-Smirnov-Test zwischen der im Datentyp definierten Verteilung und der Werteliste berechnet wird. Wobei darauf zu achten ist, dass der in der Durchführung des Tests benutzte kritische Wert modifiziert werden muss, falls in der Initialisierung des Datentyps des Tokens mindestens ein Parameter geschätzt wurde.

- Der Test ob die Werteliste dem einzigartigen Datentyp folgt kann z.B. überprüft werden, indem überprüft wird, ob die einzelnen Werte der Wertemenge jeweils einzigartig in der Liste aller Werte des Tokens sind.

- Der Test ob die Werteliste dem diskreten Datentyp folgt kann z.B. überprüft werden, indem mit einem Multinomialtest getestet wird, ob die Werteliste der hinterlegten Verteilung entstammen kann.

- Der Test ob die Werteliste dem sonstigen Datentyp folgt, testet nicht die Werteliste auf eine gewisse Eigenschaft, sondern Tokens mit dem Datentyp sonstige werden nach einer gewissen Anzahl an Updateschritten, oder alternativ direkt, darauf getestet, ob sie einem der anderen Datentypen entsprechen.

Da statistische Tests auch negativ ausfallen können, obwohl die zugrundeliegende Verteilung richtig angenommen wurde, kann eine Anpassung des Datentyps optional erst erfolgen, wenn sich die negativen Tests häufen, um ungewünschtes Verwerfen einer richtigen Verteilung zu verhindern. Ein Test wird als negativ bezeichnet, wenn das Ergebnis des Tests ergibt, dass die Stichprobe nicht der Verteilung und den Parametern der Nullhypothese entspricht.

Dabei ist zu beachten, dass jeder Test eine gewisse Unschärfe besitzt, die mit der im Folgenden beschriebenen Vorgehensweise möglichst geringgehalten werden soll: Bei der Anwendung des Kolmogorov-Smirnov-Tests können optional, wenn Parameter in der Initialisierung IT geschätzt wurden, die kritischen Werte angepasst werden. Die hier benützten angepassten kritischen Werte können sich von den in der Initialisierung IT benutzten kritischen Werte unterscheiden.

Die **Fig. 3** zeigt eine mögliche Vorgehensweise bei der, im Rahmen einer Aktualisierung eines Datentypen DT einzelner Token T alternative Datentypen DT zugeordnet werden. In dieser werden die Datentypen DT bzw. Verteilungstypen der Token T nicht vollständig neu initialisiert, wie dies im Abschnitt "Initialisierung IT der Datentypen DT" beschrieben wurde. Stattdessen, können bei der Neuinitialisierung bzw. neuerlichen Initialisierung des Datentyps von Token T mit einem zugeordneten statischen oder kontinuierlichen Datentyp alternative Datentypen zugeordnet werden.

Wenn eine Werteliste eines Tokens nicht dem zuvor zugeordneten statischen Datentyp entspricht, kann dem Token T der diskrete Datentyp zugeordnet werden.

Dies bedeutet konkret, dass der Datentyp "statisch" zum Datentyp "diskret" wird: Bei statischen Token T haben die entsprechenden Teilzeichenketten in allen Protokollzeilen bis zu diesem Zeitpunkt nur einen Wert angenommen. Tritt nun eine Protokollzeile mit einem anderen Wert in dem Token T auf, ist der Datentyp dieses Tokens diskret und soll in den folgenden Updateschritten die Verteilung lernen.

Zusätzlich oder alternativ dazu kann, im Fall, dass bei der Initialisierung IT im Rahmen des Tests auf einen kontinuierlichen Datentyp eines Tokens mehrere Verteilungstypen hinterlegt wurden, die Werteliste des Tokens auf Zugehörigkeit zu einer der restlichen hinterlegten Verteilungstypen getestet werden, wenn der Test des kontinuierlichen Datentyps mit der Werteliste negativ ausfällt. Die hinterlegten Verteilungen können alle getestet werden und eine, z.B. die mit dem größten p-Wert als Datentyp übernommen, oder optional in einer bestimmten Reihenfolge, z.B. in der absteigenden Reihenfolge der p-Werte in der Initialisierung getestet werden und die erste übernommen werden, mit einem positiven Testresultat. Sollte ein Test negativ ausfallen wird dieser entfernt und im nachfolgenden nicht mehr getestet.

Der Umstand warum die restlichen hinterlegten Verteilungen getestet werden, ist, dass die zugrundeliegende Verteilung der Werte des Tokens nicht immer aus derselben Verteilungsfamilie stammt wie die Verteilung mit dem größten p-Wert die in der Initialisierung zugeordnet wurde. Sollten in einem Updateschritt die Werteliste eines Tokens nicht zu dem zugeordneten kontinuierlichen Datentyp passen, kann dies auch auf Grund der falschen zugeordneten Verteilungsfamilie der Fall sein. Daher werden die restlichen gespeicherten Verteilungen getestet. Sollte eine Verteilung als die Verteilung der Werteliste in Frage kommen, wird diese als neuer Datentyp zugewiesen.

Dies bedeutet konkret, wenn dem Datentyp DT eines Tokens bei der Initialisierung IT eine bestimmte Verteilung zugeordnet wurde, jedoch auch andere Verteilungen hinterlegt wurden, dass, wenn die Werteliste eines Tokens dem zugeordneten kontinuierlichen Datentyp nicht entspricht und der Datentyp verworfen wird, auf Zugehörigkeit zu einem der restlichen hinterlegten Verteilungstypen getestet wird und einer der Verteilungstypen als neuer Datentyp zugeordnet wird, sollte der Test positiv sein. Dies bedeutet konkret, dass der Datentyp "kontinuierlich" zwar erhalten bleibt, dass der dem Datentyp zugeordnete bzw. der bei dem Token T hinterlegte Verteilungstyp jedoch wechseln kann.

Optional können bei dem Test eines Tokens mit einzigartigem Datentyp, nur die entsprechenden Werte des Tokens von Protokollzeilen einer zeitlich vorgegebenen Anzahl von beispielsweise 50 zeitlich vorangehender Protokollzeilen berücksichtigt werden.

4. **Anomalieerkennung** (bezeichnet mit Anomalieerkennung "AE" in Fig. 1): Ein anomaler Betriebszustand des Computersystems bzw. eine Anomalie wird erkannt, wenn der Datentyp DT von zumindest einem Token T aufgrund der neuen Werteliste zu diesem Token T angepasst werden muss. D.h. es gibt zumindest einen Token, dessen neue Werteliste nicht die Eigenschaft des zugewiesenen Datentyps DT aufweist.
Optional kann, wie später im Abschnitt Berechnung von Indikatoren "BI" beschrieben, der Verlauf der zugeordneten Datentypen DT analysiert werden und ein Wert berechnet werden, der die Wahrscheinlichkeit dafür angibt, dass eine Veränderung im Verhalten der jeweiligen Werte eines Tokens aufgetreten ist. In diesem Fall würde ein anomaler Betriebszustand des Computersystems bzw. eine Anomalie erkannt werden, wenn ein Wert der berechneten Token- und/oder Ereignistyp-Indikatoren einen gewissen Schwellwert überschreitet.

Folgende weitere Schritte können bei einem erfindungsgemäßen Verfahren optional vorgesehen sein (siehe Fig. 1, strichlierte Umrandung):

**Berechnung von Indikatoren (bezeichnet mit "BI" in Fig. 1):**

Token-Indikatoren $I_T$ können benutzt werden, insbesondere in komplexeren und/oder größeren Systemen, wenn manchen Token T kein eindeutiger Datentyp DT und/oder Verteilungstyp zugeordnet werden kann, d.h. wenn diese oft wechseln und negative Tests verursachen. Der Token-Indikator $I_T$ weißt einem Token T einen Wert zu, der angibt, wie wahrscheinlich eine Veränderung in der Generierung der Werte dieses Tokens stattgefunden hat. In solchen Systemen kann es vorkommen, dass die oben beschriebene Anomalieerkennung nur eingeschränkt benützt werden kann, weil Protokollzeilen, die einem normalen Systemverhalten entsprechen, viele falsche Anomalien erzeugen, womit die Erkennung von echten Anomalien beeinträchtigt wird. Der Token-Indikator $I_T$ schwächt diesen Effekt ab.

Die Token-Indikatoren $I_T$ der Token T können auf Basis der zugeordneten Datentypen DT und Verteilungstypen ermittelt und ausgegeben werden.

Eine Veränderung im Verhalten der Werte des Tokens tritt auf, wenn die neu zugeordneten Datentypen DT bzw. die Verteilungstypen der Token T nicht mehr die zuvor beobachteten Muster weiterführen.

Der Ereignistyp-Indikator $I_E$ kann optional, aber nur unter der Voraussetzung, dass die Token-Indikatoren $I_T$ berechnet wurden, benutzt werden, um die Information der Token-Indikatoren $I_T$ zu einem Ereignistyp in einem Wert zusammenzuführen. Der Ereignistyp-Indikator $I_E$ weist dem Ereignistypen einen Wert zu, der angibt, wie wahrscheinlich eine Veränderung in der Generierung der Protokollzeilen dieses Ereignistyps stattgefunden hat.

In der Berechnung des Ereignistyp-Indikators $I_E$ werden zuerst die den Token T eines Ereignistyps zugeordneten Datentypen DT analysiert. Zu jedem dieser Token T wird ein Token-Indikator $I_T$ berechnet, der die Wahrscheinlichkeit einer Veränderung im Verhalten der Werte der Protokollzeilen dieses Tokens beschreibt.

Auf Grundlage der einzelnen Token-Indikatoren $I_T$ der Token T eines Ereignistyps ein Ereignistyp-Indikator $I_E$ für den jeweiligen Ereignistyp ermittelt wird, der die Wahrscheinlichkeit dafür angibt, dass eine Veränderung im Verhalten der Protokollzeilen des jeweiligen Ereignistyps aufgetreten ist.

Aus dem Verhalten der Protokollzeilen der einzelnen Ereignistypen können Rückschlüsse auf das Systemverhalten gezogen werden. Somit können auch aus den einzelnen Ereignistyp-indikatoren Rückschlüsse auf das Systemverhalten gezogen werden.

Generell werden bei der Berechnung des Ereignistyp-Indikator $I_E$ zwei Arbeitsschritte vorgenommen: Zuerst wird zu jedem Token T des Ereignistyps ein Token-Indikator $I_T$ berechnet, der auf Basis des Datentyps DT dieses Tokens berechnet wird. Im zweiten Arbeitsschritt werden die Informationen aller dieser Token-Indikatoren $I_T$ des Ereignistyps zu einem gemeinsamen Ereignistyp-Indikator $I_E$ zusammengefasst.

**Berechnung der Token-Indikator-Gewichte $w_T$ (bezeichnet mit "BG" in Fig. 1):**

Optional können bei der Ermittlung des Token- oder Ereignistyp-Indikators $I_E$ die Token-Indikatoren gewichtet berücksichtigt werden, wobei die Token-Indikatoren $I_T$ derjenigen Token T stärker gewichtet werden, die in den letzten berechneten Token-Indikatoren $I_T$ geringere Werte aufwiesen. Infolgedessen haben Token, die seltener ihr Muster in der Zuordnung der Datentypen DT gewechselt haben, ein größeres zugewiesenes Gewicht und daher höhere Token-Indikator-Werte, im Falle eines Abweichens der zugewiesenen Datentypen DT von den erkannten Mustern bzw. mehr Einfluss auf den Ereignistyp-Indikator $I_E$.

Die Gewichte $w_T$ können benutzt werden, um die Token-Indikatoren $I_T$ anzupassen, wenn in der Ereignistyp-Indikator-Berechnung der Einfluss der Token-Indikatoren $I_T$ auf das Ergebnis anzupassen ist. Je höher die früher berechneten Token-Indikatoren $I_T$ waren, desto geringer werden die berechneten Gewichte und infolge dessen wird der Einfluss dieses Token-Indikators $I_T$ auf den berechneten Ereignistyp-Indikator $I_E$ verringert. Dies führt zu einer Reduktion von False Positives in der Anomalieerkennung.

Dieser Schritt verbessert die Ergebnisse der Token- und Ereignistyp-Indikatoren, indem der Einfluss von Token, die regelmäßig für hohe Werte der zugehörigen Token-Indikatoren $I_T$ sorgen, reduziert wird. Dies kann notwendig sein, wenn Token T regelmäßig für hohe Werte der Token-Indikatoren $I_T$ sorgen, obwohl keine Anomalien auftreten, da keine präzisen Aussagen mit diesen Token-Indikatoren $I_T$ getroffen werden können, ohne die Berechnung der Token-Indikatoren $I_T$ oder den Einfluss des Tokens auf den Ereignistyp-Indikators $I_E$ anzupassen.

**Selektion der Tokens (bezeichnet mit "ST" in Fig. 1):**

Dieser optionale Schritt kann eingesetzt werden, um den Ablauf des Verfahrens zu beschleunigen. Hierzu werden die Werte und Datentypen DT der Token T der Ereignistypen analysiert und entschieden, welche Token T voraussichtlich keinen besonderen Mehrwert für den Ereignistyp-Indikator $I_E$ bieten. Ein Beispiel für ein Kriterium zur Auswahl der Token T ist das Testen, ob es einen Datentyp DT gibt, der in der Historie der zugeordneten Datentypen DT in den meisten Fällen zugeordnet wurde. Sollte es keinen solchen Datentyp DT geben, würde der Token T in diesem Schritt nicht selektiert werden, da es keinen Datentyp DT gibt, der den Token T zureichend beschreibt. In weitere Folge werden die Datentypen DT dieser Token T nicht mehr getestet bzw. upgedatet.

Dies bedeutet, dass nur für ausgewählte, insbesondere die variablen, Token T des jeweiligen Ereignistyps analysiert wird, ob die Werteliste der Token T dem zugeordneten Datentyp DT und/oder dem Verteilungstyp entsprechen. Um nur die variablen Token T analysieren zu können, kann vorab bekannt sein, welche Token T des jeweiligen Ereignistyps statische Token T sind, sodass Werte diese Tokens nicht getestet werden. Alternativ kann schon in der Aufbereitung der Protokollzeilen festgelegt werden, dass die Werte dieser Token T von dem beschriebenen Verfahren ausgeschlossen werden um nicht getestet zu werden.

**Ausgabe der Resultate (Bezeichnet mit "AR" in Fig. 1):**

In diesem optionalen Schritt wird der Verlauf der Datentypen DT und/oder berechneten Token- und/oder Ereignistyp-Indikatoren $I_E$ ausgegeben um für nachfolgende Untersuchungen oder Bewertungen zu dienen.

**Im Folgenden werden nun konkrete Ausführungsbeispiele eines erfindungsgemäßen Verfahrens zur Detektion von anomalen Betriebszuständen eines Computersystems im Detail beschrieben:**

Bei den folgenden Ausführungsbeispielen werden zunächst die verwendeten Methoden und Tests ausformuliert. Danach wird ein Ausführungsbeispiel eines erfindungsgemäßen Verfahrens schrittweise mit einem Beispieldatensatz ausgeführt. Die Tests sind beispielhaft und können für die Ausführung eines erfindungsgemäßen Verfahrens durch gleichwertige Tests ersetzt werden.

**Erstes Ausführungsbeispiel: Initialisierung IT der Datentypen DT eines Ereignistyps (Schritt "IT" in Fig. 1 und Fig. 2)**

**Allgemeine Beschreibung der Vorgehensweise**

Dieses Bespiel beschreibt die Initialisierung IT der Datentypen DT eines Ereignistyps.

Der benutzte sequentielle Testablauf ist in Fig. 2 dargestellt. Die einzelnen Tests zu den Datentypen DT lauten:

• Test auf den <u>chronologischen Datentyp</u>: Der Test zu dem chronologischen Datentyp ist eine Abfrage, ob alle Werte der Werteliste des Tokens eine gewisse Struktur besitzen. In diesem Beispiel wird die Struktur "xxx-yy-yy:yy:yy" genutzt, wobei "x" für einen beliebigen Buchstaben und "y" für eine beliebige Ziffer steht. Die Struktur wird im folgenden Zeitstempelstruktur genannt. Besitzt einer der getesteten Werte nicht die Zeitstempelstruktur, fällt der Test negativ aus.

• Test auf den <u>statischen Datentyp</u>: Dieser Test besteht aus einer Abfrage, ob alle Werte der Werteliste des Tokens gleich dem ersten Wert dieser Liste sind. Gibt es einen Wert, der sich vom ersten unterscheidet, fällt der Test negativ aus.

• Test auf den <u>auf-/absteigenden Datentyp</u>: Beginnend mit dem ersten Wert der Werteliste des Tokens, wird überprüft, ob alle Werte Zahlen, d.h. numerische Werte, sind, und ob sie aufsteigend oder absteigend sind. Bei diesem Test wird auf größer gleich/kleiner gleich getestet. Der Test ist negativ, wenn es mindestens einen nicht numerischen Wert gibt, oder jeweils zwei aufeinanderfolgende Werte nicht auf- oder absteigend sind.

• Test auf den <u>kontinuierlichen Datentyp</u>: Bei dem Test auf den kontinuierlichen Datentyp kann zunächst festgelegt werden, welche Verteilungen, oder Verteilungsfamilien getestet werden. Im folgenden Ausführungsbeispiel wird die Familie der Normal- und Uniformverteilungen betrachtet. Bei der Uniformverteilung werden die Parameter Minimum und Maximum auf Basis der Werteliste geschätzt und bei der Normalverteilung Erwartungswert und Varianz. Im Ausführungsbeispiel wird das Minimum und Maximum als das Minimum und Maximum der Werteliste geschätzt und der Erwartungswert und die Varianz als der empirische Erwartungswert und die empirische Varianz.

Als Test in diesem Beispiel wird der Kolmogorov-Smirnov-Test gewählt. Daher müssen, wie schon im Vorfeld beschrieben, die kritischen Werte berechnet werden, bevor die Kolmogorov-Smirnov-Tests ausgewertet werden können. Für dieses Ausführungsbeispiel sind die nötigen Werte in Tabelle 2 (Liste der kritischen Werte im Initialisierungsschritt mit Stichprobengröße m=5) abgebildet.

Tabelle 2: Liste der kritischen Werte im Initialisierungsschritt mit Stichprobengröße m=5

| p-Wert | 0.05 | 0.10 | 0.15 | 0.20 | 0.25 | 0.30 | 0.35 | 0.40 | 0.45 |
|---|---|---|---|---|---|---|---|---|---|
| Uniformal | 0.539 | 0.496 | 0.464 | 0.436 | 0.412 | 0.395 | 0.386 | 0.376 | 0.365 |
| Normal | 0.357 | 0.332 | 0.316 | 0.302 | 0.288 | 0.277 | 0.269 | 0.261 | 0.254 |

Der Test besteht aus einem Test, ob die Werte der Werteliste des Tokens numerisch und unterschiedlich genug sind, um auf den kontinuierlichen Datentyp getestet zu werden und nachfolgend wird getestet ob die Werteliste einer der gewählten Verteilungen oder Verteilungsfamilien entstammt.

Für den Test der Unterschiedlichkeit wird berechnet, wie viele Werte einzigartig sind. Der Schwellwert dieser Beschreibung liegt in diesem Beispielbei mindestens vier unterschiedlichen Werten, was 80% entspricht, innerhalb der Stichprobe, um als kontinuierlich betrachtet zu werden.

Wenn die Werte numerisch sind und den Test auf Unterschiedlichkeit positiv bestehen, wird ihnen eine Verteilung zugeordnet. Sollte bei den Kolmogorov-Smirnov-Tests kein p-Wert das gewählte Signifikanzniveau übersteigen, wird in diesem Beispiel di optionale empirische Verteilung ermittelt und als Verteilung abgespeichert. In diesem Beispiel wird 0.05 als Signifikanzniveau gewählt.

Der Test ist negativ, sobald ein Wert der Wertemenge nicht numerisch ist, oder der Test auf Unterschiedlichkeit negativ ist. Sollten alle Werte numerisch sein und der Test auf Unterschiedlichkeit positiv, wird durch diese Methode immer eine Verteilung zugeordnet.

• Test auf den einzigartigen Datentyp: Der Test auf Einzigartigkeit testet jeden Wert der Werteliste des Tokens, ob er ein weiteres Mal in der Werteliste vorkommt. Der Test ist negativ, sobald ein Wert mindestens zweimal auftritt.

• Test auf den diskreten Datentyp: Diskrete Token T zeichnen sich dadurch aus, dass die Anzahl der angenommenen Werte beschränkt ist. Daher lautet der Test, ob die Anzahl der einzigartigen Werte der Werteliste einen gewissen Schwellwert nicht überschreitet.

Für fünf eingelesene Werte wird der Schwellwert in diesem Beispiel mit drei festgelegt, was 60% der eingelesen Werte entspricht.

Der Test fällt negativ aus, wenn die Anzahl der einzigartigen Werte den Schwellwert überschreitet.

**Konkrete Beschreibung anhand beispielhafter, aufbereiteter Protokollzeilen (siehe Tabelle 3)**

Tabelle 3 zeigt eine Stichprobe von eingelesenen und aufbereiteten Protokollzeilen, die demselben Ereignistyp zugeordnet wurden, mit dem zugehörigen Template in der ersten Zeile und den, den Token T des Ereignistyps bei der Initialisierung IT zugeordneten, Datentypen DT in der letzten Zeile.

Tabelle 3: Beispiel eines Templates mit zugehörigen Protokollzeilen und Datentypen

| § | CPU temp= | § | , | § | fan freq |
|---|---|---|---|---|---|
| Jul 17 11:30:1 | CPU temp= | 43.62 | , | decreasing | fan freq |
| Jul 17 11:32:27 | CPU temp= | 56.25 | , | decreasing | fan freq |
| Jul 17 11:33:22 | CPU temp= | 64.42 | , | increasing | fan freq |
| Jul 17 11:35:58 | CPU temp= | 66.54 | , | decreasing | fan freq |
| Jul 17 11:36:43 | CPU temp= | 61.81 | , | increasing | fan freq |
| chronologisch | statisch | kontinuierlich | statisch | diskret | statisch |

Die Unterteilung der Protokollzeilen in Teilzeichenabfolgen erfolgte im Ausführungsbeispiel an Leerzeichen, wobei angrenzende Token T mit fixen Werten zu einem Token T zusammengefügt werden.

Wie anhand des Templates in der ersten Zeile von Tabelle 3 abgelesen werden kann, umfasst der betrachtete Ereignistyp sechs Token, wobei an drei Positionen des Templates variable Token, sog. Wildcards "§" vorhanden sind, sowie die statischen Token T "CPU temp=", " , " und "fan freq".

Bei der Aufbereitung werden die Werte der Token T der Stichprobe an Protokollzeilen in getrennte Listen gespeichert, sodass die in der folgenden Tabelle 4 dargestellten Listen zur Verfügung stehen. Jede Zeile von Tabelle 4 entspricht dabei der Liste der zugehörigen Teilzeichenabfolgen der Stichprobe zu einem Token, d.h. der Werteliste des Tokens:

Tabelle 4 zeigt die Wertelisten der Token T der in dieser Beschreibung benutzten Stichprobe an Protokollzeilen.

Tabelle 4: Template der Beschreibung und zugehörige Wertelisten der Token

| § | Jul 17 11:30:18 | Jul 17 11:32:27 | Jul 17 11:33:22 | Jul 17 11:35:58 | Jul 17 11:36:43 |
|---|---|---|---|---|---|
| CPU temp= | CPU temp= | CPU temp= | CPU temp= | CPU temp= | CPU temp= |
| § | 43.62 | 56.25 | 64.42 | 66.54 | 61.81 |
| , | , | , | , | , | , |
| § | decreasing | decreasing | increasing | decreasing | increasing |
| fan freq | fan freq | fan freq | fan freq | fan freq | fan freq |

Die Initialisierung IT des Datentyps DT des ersten Tokens des Ereignistyps anhand der Werteliste, beginnt mit dem Test, ob die Werte chronologisch sind. Dieser fällt im Ausführungsbeispiel positiv aus, da alle Werte die beschriebene Zeitstempelstruktur aufweisen. Daher wird dem ersten Token T des Ereignistyps der Datentyp "chronologisch" zugeordnet.

Bei der Initialisierung IT des Datentyps DT des zweiten, vierten und sechsten Tokens des Ereignistyps fällt für diese im Rahmen des sequentiellen Testablaufs der Test auf den chronologischen Datentyp jeweils negativ aus, da die Werte der Werteliste (siehe Tabelle 4, Zeile 2 für die Werte der zweite Werteliste, Zeile 4 für die viertele Werteliste und Zeile 6 für die sechste Werteliste), nicht die Zeitstempelstruktur besitzen. Zum Beispiel ist das fünfte Zeichen des ersten Wertes des zweiten Tokens ein "t", welches in der Zeitstempelstruktur eine Ziffer ist.

Daher werden die Wertelisten zu dem zweiten, vierten und sechsten Token T jeweils auf Zugehörigkeit zum nächstfolgenden Datentyp DT des sequentiellen Testablaufs geprüft, d.h. als nächstes wird jeweils der Test auf den statischen Datentyp angewendet. Da sich die einzelnen Werte der betreffenden Token T jeweils nicht unterscheiden, ist dieser Test für alle drei Token T positiv. Daher wird der zweiten, vierten und sechsten Token T des Ereignistyps der Datentyp "statisch" mit den Werten "CPU temp=", " , " und "fan freq", zugewiesen.

Die Werte des dritten Tokens (siehe Tabelle 4, Zeile 3 für die Werte der dritten Werteliste) durchlaufen die Tests auf chronologische, statische, aufsteigende, und absteigend Datentypen, welche alle negativ ausfallen. Somit wird als nächstfolgender Test des sequentiellen Testablaufs der Test auf Zugehörigkeit der Wertemenge zum kontinuierlichen Datentyp ausgeführt. Es wird getestet, ob die Werte numerisch und unterschiedlich genug sind. Da alle Werte numerisch sind und jeder Wert ein einziges Mal auftritt, sind beide Tests positiv. Daher wird dem dritten Token T des Ereignistyps der kontinuierliche Datentyp zugeordnet.

Als nächstes werden daher im Ausführungsbeispiel die Kolmogorov-Smirnov-Tests zu den einzelnen zu testenden Verteilungsfamilien ausgeführt. Im Ausführungsbeispiel wird auf die Zugehörigkeit zur Uniformverteilung und zur Normalverteilung getestet. Die im Rahmen des sequentiellen Testablaufs beim Test auf den kontinuierlichen Datentyp zu testenden Verteilungen bzw. Verteilungsfamilien können dabei vorab festgelegt werden.

Für die Uniformverteilung wird das Minimum auf 43.62 und das Maximum auf 66.54 geschätzt und für die Normalverteilung der Erwartungswert auf 58.528 und die Varianz auf 67.423 geschätzt. Die Schätzung der Parameter erfolgt dabei anhand der Werte der Werteliste. Hier sei darauf hingewiesen, dass bei einer geringen Anzahl an Werten ein Test auf eine kontinuierliche Verteilung unscharf sein kann. Daher ist für eine reguläre Ausführung eine höhere Anzahl an Werten für die Initialisierung der Datentypen DT der Token T und der Updateschritte UT der Datentypen DT der Token T vorteilhaft.

Als nächstes werden die Werte der Teststatistik des Kolmogorov-Smirnov-Tests berechnet. Der Wert der Teststatistik des Kolmogorov-Smirnov-Tests der Uniformverteilung ist 0.394 und der der Normalverteilung 0.255. Die getesteten Verteilungen entstehen dabei indem die Parameter der Verteilungsfamilien durch die Schätzungen der Parameter spezifiziert werden.

Nun werden die p-Werte ermittelt. Dazu werden in der vorberechneten Tabelle (Tabelle 2), mit Hilfe der kritischen Werte, der p-Wert durch Interpolation ausgelesen. Der p-Werte der Uniformverteilung ist 0.30 und der p-Wert der Normalverteilung 0.44. Da der p-Wert der Normalverteilung größer ist, als der p-Wert der Uniformverteilung, wird dem dritten Token T des Ereignistyps der kontinuierliche Datentyp mit der Verteilung [Normal, 58.528, 67.423] zugeordnet. Weiters wird die Verteilung [Uniform, 43.62, 66.54] für weitere Tests in folgenden Updateschritten hinterlegt.

Die Werte des fünften Tokens (Tabelle 4, Zeile 5 für die Werte der fünften Werteliste) durchlaufen die Tests auf chronologische und statische Datentypen mit einem negativen Ergebnis, da die Werte nicht die Zeitstempelstruktur aufweisen und nicht alle gleich sind. Auch die Tests auf aufsteigenden, absteigenden und kontinuierlichen Datentypen sind negativ, da die Werte nicht numerisch sind. Danach wird auf Einzigartigkeit getestet, was ebenfalls negativ ausfällt, da der erste und zweite Wert gleich sind.

Der Test auf diskrete Datentypen fällt positiv aus, da es zwei unterschiedliche Werte gibt, was unter dem im Ausführungsbeispiel vorgegebenen Schwellenwert von drei liegt. Somit wird dem fünften Token T des Ereignistyps der Datentyp "diskret" mit der Verteilung ["decreasing":60%, "increasing":40%] zugeordnet.

Nun sind die Datentypen DT der einzelnen Token T dieses Ereignistyps mit den Protokolldaten von Tabelle 3 initialisiert und es kann eine Anomalieerkennung durchgeführt werden, sobald ausreichend viele neu vom Computersystem erstellte und aufbereitete, d.h. einem Ereignistyp zugeordnete und in Teilzeichenabfolgen unterteilte, Protokollzeilen vorliegen.

**Zweites Ausführungsbeispiel: Update UT der Datentypen DT der Token T des Ereignistyps aus Tabelle 3 (Schritt "UT" in Fig. 1)**

**Allgemeine Beschreibung der Vorgehensweise**

Im Folgenden wird ein Updateschritt UT der Datentypen DT des im Ausführungsbeispiel 1 beschriebenen Ereignistyp mit dessen zugeordneten Datentypen DT beschrieben.

Die Werteliste der Tokens bezieht sich in diesem Beispiel auf die Stichprobe der in diesem Updateschritt betrachteten Protokollzeilen.

Sollte bei einer Stichprobe an neu erstellten Protokollzeilen für einen oder mehrere Token T der Test auf Zugehörigkeit zu dem zuvor für den Token T des Ereignistyps festgelegten Datentyp DT nicht mehr positiv ausfallen, wird bei zuvor statischen Datentypen der diskrete Datentyp zugeordnet und bei zuvor kontinuierlichen Datentyp können die hinterlegten Verteilungen getestet werden. Für alle anderen Fälle kann generell der Datentyp DT des betreffenden Tokens auf den sonstigen Datentyp gesetzt werden (siehe Fig. 3).

Der Updateschritt UT der Datentypen DT der Token T des Ereignistyps erfolgt im Ausführungsbeispiel mit den im Folgenden beschriebenen Tests:

• Test auf den chronologischen Datentyp: Der Test zu dem chronologischen Datentyp ist gleich zu dem Test in der Initialisierung IT der Datentypen der Wertemenge eines Tokens, wie sie zuvor beschrieben wurde. Es werden alle Werte der Werteliste des Tokens getestet, ob sie die Zeitstempelstruktur "xxx-yy-yy:yy:yy" besitzen, wobei "x" für einen beliebigen Buchstaben und "y" für eine beliebige Ziffer steht.

• Test auf den statischen Datentyp: In diesem Test werden alle Werte der Werteliste auf Gleichheit mit dem Wert des statischen Datentyps getestet. Gibt es einen Wert, der sich unterscheidet, ist der Test negativ.

• Test auf den auf-/absteigenden Datentyp: Zu Beginn werden alle Werte der Werteliste überprüft, ob sie numerisch sind. Ist das erfüllt, werden sie, bei aufsteigendem Datentyp, beginnend mit dem ersten Wert überprüft, ob sie größer gleich oder bei absteigendem Datentyp kleiner gleich dem vorherigen Wert sind. Der Test ist negativ, bei mindestens einem nicht numerischen Wert, oder falls ein Wert die auf- oder absteigende Ordnung unterbricht.

• Test auf den kontinuierlichen Datentyp: Bei dem Test auf den kontinuierlichen Datentyp, werden die Werte der Werteliste gegen die im Datentyp des Tokens spezifizierte Verteilung getestet. Fällt der Test positiv aus, wird der Datentyp des Tokens beibehalten.

Falls der Test auf den bisherigen Verteilungstyp negativ ausfällt, werden im Ausführungsbeispiel, falls in der Initialisierung IT des betreffenden Tokens mehrere Verteilungen höhere p-Werte als das vorgegebenes Signifikanzniveau erreicht haben, die alternativen hinterlegten Verteilungen getestet.

Sollten bei der Initialisierung auf Verteilungsfamilien und nicht auf ausgewählte Verteilungen getestet worden sein, können insbesondere die kritischen Werte modifiziert werden. In diesem Ausführungsbeispiel wird der Kolmogorov-Smirnov-Test als Test für den kontinuierlichen Datentyp benutzt. Da auf Verteilungsfamilien getestet wird, müssen die kritischen Werte modifiziert werden. Eine Zusammenfassung der kritischen Werte zu gegeben p-Werten ist in Tabelle 5 (Liste der kritischen Werte im Updateschritt mit Stichprobengröße n=5 und einer Initialisierung IT mit m=5) angeführt.

Tabelle 5: Liste der kritischen Werte im Updateschritt mit Stichprobengröße n=5 und einer Initialisierung IT mit Stichprobengröße m=5

| p-Wert | 0.05 |
|---|---|
| Uniformal | 0.800 |
| Normal | 0.739 |

Die Werte von Tabelle 5 wurden mittels Monte-Carlo (MC)Methode (siehe z.B. Lapeyre, B. (2007). Introduction to Monte-Carlo Methods. Lecture, Halmstad, Sweden, 2-4) berechnet. Hierbei wurden, für das Ausführungsbeispiel, für jeden Durchgang des Versuchs zu einer Verteilungsfamilie, in diesem Ausführungsbeispiel der Uniform- und Normalverteilung, eine Stichprobe der Größe 5 in der Initialisierung und eine der Größe 5 im Updateschritt erzeugt. Anschließend werden die Parameter der Verteilungsfamilie auf Basis der Stichprobe zu der Initialisierung geschätzt und ein KS-Test berechnet der die Stichprobe zum Updateschritt gegen die durch die berechneten Parameter spezifizierte Verteilungsfamilie berechnet. Das Ergebnis jedes Durchgangs in der Monte-Carlo-Simulation (MC-Simulation) ist ein berechneter Wert der Teststatistik eines KS-Tests. Der berechnete kritische Wert zu einem gegeben p-Wert, in diesem Ausführungsbeispiel 0.05, wird folgendermaßen ermittelt: Zuerst wird die Liste der Werte der Teststatistiken der KS-Tests zu den einzelnen Durchläufen der MC-Simulation erzeugt und geordnet. Anschließend wird aus der geordneten Liste der $Thres_{MC}$-kleinste Wert in der Tabelle ausgewählt, wobei $Thres_{MC}$ mit der unten beschriebenen Formel berechnet wird. Der kritische Wert wird dem ausgewählten Wert gleichgesetzt.

$$Thres_{MC} = (\text{p-Wert}) * (\text{Anzahl der MC-Simulationen})$$

Der Test auf Zugehörigkeit des betreffenden Tokens zum kontinuierlichen Datentyp im Rahmen des Updateschritts UT besteht zunächst aus einem Test, ob die Werte numerisch sind und dem nachfolgenden Kolmogorov-Smirnov-Test auf die spezifizierte Verteilung. Bei dem Kolmogorov-Smirnov-Test wird der Wert der Teststatistik, zwischen der Werteliste des Tokens und der im Datentyp beschriebenen Verteilung berechnet. Sollte der berechnete Wert größer als der kritische Wert des gewählten Signifikanzniveaus sein, ist der Test negativ und es werden die alternativen Verteilungen getestet, sofern alternative Verteilungen dem Datentyp der jeweiligen Token T zugeordnet worden sind.
Im Ausführungsbeispiel wird 0.05 als Signifikanzniveau gewählt.
• Test auf den einzigartigen Datentyp: Der Test auf Einzigartigkeit testet jeden Wert der Werteliste, ob er in allen vorangegangen Werten, seit dem der Datentyp zugeordnet wurde, aufgetreten ist. Der Test ist negativ, sobald ein Wert mindestens zwei Mal aufgetreten ist.
• Test auf den diskreten Datentyp: Für diesen Test wird mittels eines Multinomialtests geprüft, ob die Werte der Werteliste aus der Verteilung stammen, die im Datentyp festgelegt ist. Sollte der Test positiv sein, wird die Verteilung neuerlich mit diesem Datentyp initialisiert bzw. upgedated.

Im Anschluss wird für ausgewählte Datentypen DT ein Updateschritt UT ausgeführt:

**Konkrete Beschreibung eines Updateschrittes UT des Datentyps einzelner Token T anhand beispielhafter, aufbereiteter Protokollzeilen (siehe Tabelle 6)**

In diesem Ausführungsbeispiel werden die Datentypen DT der Token T desselben Ereignistyps upgedated, welcher in dem Ausführungsbeispiel zu der Initialisierung der Datentypen DT beschrieben wurde. Die zugeordneten Datentypen DT entsprechen dem Resultat des vorigen Ausführungsbeispiels, welche auf Basis von 5 Protokollzeilen erzeugt wurden (m=5).
Die Aufbereitung der Protokollzeilen erfolgt analog zur Aufbereitung in der Initialisierung. Die Wertelisten der Token T zu den fünf aufbereiteten Protokollzeilen (n=5) sind in Tabelle 6 beschrieben.

Tabelle 6: Template eines Ereignistyps und zugehörige Wertelisten der Token

| § | Jul 17 11:37:26 | Jul 17 11:39:12 | Jul 17 11:40:38 | Jul 17 11:41:05 | Jul 17 11:41:53 |
|---|---|---|---|---|---|
| CPU temp= | CPU temp= | CPU temp= | CPU temp= | CPU temp= | CPU temp= |
| § | 118.71 | 118.86 | 121.00 | 119.51 | 133.15 |
| , | , | , | , | , | , |
| § | increasing | increasing | increasing | increasing | increasing |
| fan freq | fan freq | fan freq | fan freq | fan freq | fan freq |

Token1 (Chronologischer Datentyp):

Der zugeordnete Datentyp DT von Token 1 ist chronologisch. Daher ist der Test dieses Tokens eine Überprüfung, ob alle Werte der Werteliste die Zeitstempelstruktur besitzen. Da dies bei allen Werten der Fall ist, wird der Datentyp nicht verworfen und der chronologische Datentyp bleibt erhalten.

Token 2/4/6 (Statischer Datentyp):

Die zugeordneten Datentypen DT der Token 2, 4 und 6 sind statisch mit den Werten "CPU temp=", " , " und "fan freq". Der Test dieser Token ist eine Überprüfung, ob alle Werte der Werteliste gleich der zugehörigen gespeicherten Zeichenabfolge sind. Da dies für alle Wertelisten gilt, bleiben ebenfalls alle Datentypen zu diesen drei Token erhalten.

Token 3 (Kontinuierlicher Datentyp):

Der zugeordnete Datentyp DT dieses Tokens sei der im ersten Ausführungsbeispiel festgestellte kontinuierliche Datentyp mit dem Verteilungstyp [Normal, 58.528, 67.423]. Als alternative Verteilung sei [Uniform, 45.30, 103.52] ermittelt und mit der Zuordnung des Datentyps DT hinterlegt worden.

Die Wertemenge des Tokens ist [118.7104643 118.86013634 120.99735509 119.50913883 133.14766635].

Zuerst werden die Werte der Werteliste des dritten Tokens getestet, ob sie numerisch sind. Da kein Wert nicht numerisch ist, wird der Wert der Teststatistik des Kolmogorov-Smirnov-Tests bezüglich der im Datentyp definierten Verteilung [Normal, 58.528, 67.423] berechnet. Diese ist 0.814. Da der Wert größer ist, als der kritische Wert zu dem Signifikanzniveau in Tabelle 5 (Liste der kritischen Werte im Updateschritt mit Stichprobengröße n=5 und einer Initialisierung IT mit m=5), welche 0.739 ist, wird der Datentyp DT des Tokens des Ereignistyps geändert.

Nun wird der Test für die alternative Verteilung [Uniform, 43.62, 66.54] durchgeführt. Der Wert der Teststatistik des Kolmogorov-Smirnov-Test beträgt 1.000, womit diese Verteilung nicht zugeordnet wird, da der Wert größer ist als 0.800, dem zugehörigen kritischen Wert. Wäre der Wert kleiner als der kritische Wert, würde dem Token der Datentyp kontinuierlich mit dieser Verteilung zugeordnet werden. Da keine der alternativen Verteilungen den Test positiv bestanden hat, wird der Datentyp zu sonstig geändert und der Updateschritt UT beendet.

An dieser Stelle sei erwähnt, dass die Zuordnung der Datentypen DT nicht die genaue Verteilung findet und überprüft, sondern eine geschätzte Verteilung angibt, die zur selben Verteilungsfamilie gehört und annähernd dieselben Parameter besitzt wie die zugrundeliegende Verteilung der Werteliste des Tokens in dem Schritt in dem der Datentyp DT initialisiert wurde.

Token 5 (Diskreter Datentyp):

Der zugeordnete Datentyp DT des fünften Tokens ist der im ersten Ausführungsbeispiel zugeordnete diskrete Datentyp mit der Werteverteilung ["decreasing":60%, "increasing":40%], für den jedoch, wie zuvor bereits erwähnt, im zweiten Ausführungsbeispiel angenommen wird, dass er basierend auf einer Stichprobe von 5 Protokollzeilen zugeordnet wurde.

Die neuen Wertemenge des Tokens im zweiten Ausführungsbeispiel ist ["increasing", "increasing", "increasing", "increasing", "increasing"].

Der Multinomialtest wird berechnet und ergibt einen p-Wert von 0.01. Da dieser Wert unter dem Signifikanzniveau von 0.05 liegt, wird der diskrete Datentyp des Tokens verworfen und der sonstige Datentyp zugeordnet.

Wäre der Datentyp beibehalten worden, würde die Verteilung des Datentyps upgedated werden. Hierbei wird die Verteilung der Werte in der Initialisierung mitsamt der Werte aller Updateschritte berechnet, bei denen der Test auf den diskreten Datentyp positiv war. Da im zweiten Ausführungsbeispiel angenommen wird, dass bisher nur ein Initialisierungsschritt gemacht wurde und noch kein Updateschritt UT, werden nur die 5 Werte der Initialisierung des Datentyps des Tokens herangezogen. Die Verteilung der Werte ist ["decreasing":60%, "increasing":40%].

Gemeinsam mit den neuen Werten des Updateschritts ["decreasing":00%, "increasing":100%], die auf Basis von fünf Werten berechnet wurde, würde die neuerlich initialisierte Werteverteilung ["decreasing":30%, "increasing":70%] ergeben.

**Drittes Ausführungsbeispiel: Berechnung von Token- und Ereignistyp-Indikators (Schritt "BI" in Fig. 1)**

Beschreibung des Token-Indikators $I_T$

Bei den Berechnungen ist darauf zu achten, dass Token, die ihr Verhalten häufig ändern bzw. kein stetes Muster der Zuordnung der Datentyp DT besitzen, in höheren Token-Indikatoren $I_T$ resultieren sollen, als Token, die ihr Verhalten beibehalten bzw. deren zugeordnete Datentypen DT ein gleichbleibendes Muster erkennen lassen.

Daraus folgt, dass hohe Token-Indikator-Werte nahe bei 1 entweder auf Veränderungen im Systemverhalten hindeuten oder auf Token, die prinzipiell kein stabiles Verhalten aufweisen und daher nicht zur Anomalieerkennung genutzt werden sollten. Hingegen beschreiben niedrige Ereignistyp-Indikatoren $I_E$ mit Werten nahe bei 0 stabiles bzw. normales Systemverhalten.

Im dritten Ausführungsbeispiel wird der Ansatz gewählt, dass die Berechnung der Token-Indikatoren $I_T$ zu einem Token T auf Basis eines Abschnittes der Liste der zuletzt zugeordneten Datentypen $DT_{T,Akt}$ und einem vergangenen Abschnitt der Liste der zugeordneten Datentypen $DT_{T,Ref}$, die als Referenz dient, durchgeführt wird. Die beiden Abschnitte können zum Beispiel gewählt werden als

$$DT_{T,Akt} = [\, DT_{T,1},\ DT_{T,2}, \ldots, DT_{T,n_1}] \text{ und } DT_{T,Ref} = [\, DT_{T,n_2}, \ldots, DT_{T,n_3}],$$

wobei $DT_{T,i}$ der i-letzte zugeordnete Datentyp DT des Tokens T ist und $n_1 < n_2 < n_3$ natürliche Zahlen sind, die definieren wie viele und welche der zuletzt zugeordneten Datentypen DT in den Abschnitten enthalten sind.

Um das dritte Ausführungsbeispiel übersichtlich zu halten, erfolgt die Berechnung des Token-Indikators nur auf der Basis der zugeordneten Datentypen DT und nicht der zugeordneten Verteilungen. Des Weiteren erfolgt die Berechnung des Token-Indikators $I_T$ auf Basis der relativen Häufigkeiten $h(DT_{T,Akt})$ und $h(DT_{T,Ref})$ der Datentypen DT von $DT_{T,Akt}$ und $DT_{T,Ref}$ des Tokens T. $h(DT_{T,Akt})$ und $h(DT_{T,Ref})$ sind Listen, die für jeden Datentyp DT einen Eintrag zwischen Null und Eins besitzt, die die relative Häufigkeit des Datentyps angeben. Der gewählte Test für die Token-Indikatoren $I_T$ ist durch die $d_2$-Metrik definiert, die den Abstand zwischen den beiden Häufigkeiten berechnet. Die Formel für einen Token-Indikator $I_T$ lautet

$$I_T = d_2\big(h\big(DT_{T,Ref}\big), h\big(DT_{T,Akt}\big)\big).$$

Um eine Aussage über den berechneten Token-Indikator $I_T$ zu treffen, kann getestet werden, ob der Token-Indikator $I_T$ über einem Schwellwert liegt oder nicht. Der Schwellwert hängt sowohl von der Berechnung des Token-Indikators $I_T$ und der Art der eingelesen Protokollzeilen ab und kann daher vom Nutzer vorgeben werden oder durch ein anderes Verfahren geschätzt werden. Im dritten Ausführungsbeispiel sei der Schwellwert mit 0.6 angenommen.

Zunächst wird exemplarisch ein Token-Indikator $I_T$ berechnet.

Die benötigten Häufigkeiten der zugeordneten Datentypen DT zu dem Token T für die Berechnung des Token-Indikators $I_T$ in diesem Ausführungsbeispiel sind im Folgenden festgelegt. Die Reihenfolge der Datentypen DT in den Listen der Häufigkeiten ist [chronologisch, aufsteigend, absteigend, statisch, einzigartig, diskret, kontinuierlich, sonstig].

$$h(DT_{T,Ref}) = [0, 0, 0, 0.2, 0, 0.7, 0, 0.1]$$

$$h(DT_{T,Akt}) = [0, 0, 0, 0, 0, 0.8, 0, 0.2]$$

In diesem Beispiel besteht die Referenz zu 20% aus dem statischen, zu 70% aus dem diskreten und zu 10% aus dem sonstigem Datentyp.

Berechnung des Token-Indikators $I_T$

Der berechnete Token-Indikator $I_T$ unter diesen Verteilungen ist

$$I_T = d_2\big(h\big(DT_{T,Ref}\big), h\big(DT_{T,Akt}\big)\big) = d_2\big((0,0,0,0.2,0,0.7,0,0.1),(0,0,0,0,0,0.8,0,02.2)\big) = 0.245.$$

Für die Berechnung des Ereignistyp-Indikators K, sei die Liste der berechneten Token-Indikatoren $I_T$ zu einem Ereignistyp durch [0.245, 0, 0, 0, 0.734, 0, 0.181] gegeben.

Beschreibung des Ereignistyp-Indikators $I_E$

Die Berechnung des Ereignistyp-Indikators $I_E$ baut, wie zuvor bereits beschrieben, auf den Token-Indikatoren $I_T$ zu den einzelnen Token T eines Ereignistyps auf und fasst die Information aller Token-Indikatoren $I_T$ des Ereignistyps zusammen.

Daher hängt die Berechnung des Ereignistyp-Indikators $I_E$ sowohl von der gewählten Formel für die Berechnung der Token-Indikatoren $I_T$, als auch von der Formel für die Berechnung des Ereignistyp-Indikators $I_E$ aus den Token-Indikatoren $I_T$ ab.

Dabei deuten hohe Token-Indikator-Werte nahe bei 1 entweder auf Veränderungen im Systemverhalten hin oder auf das beinhalten von Token T im Ereignistyp, die prinzipiell kein stabiles Verhalten aufweisen und daher nicht zur Anomalieerkennung genutzt werden sollten.

Niedrige Ereignistyp-Indikatoren $I_E$ mit Werten nahe bei 0 deuten hingegen auf ein stabiles bzw. normales Systemverhalten hin.

Für die Berechnung des Ereignistyp-Indikators $I_E$ wird in diesem Ausführungsbeispiel die Formel

$$I_E = \tan^{-1}\left(2 * \sum\nolimits_{T \in Token} I_T\right) * 2/\pi$$

verwendet. Diese Formel kann für Ereignistypen mit einer beliebigen Anzahl an Token T verwendet werden.

Berechnung des Ereignistyp-Indikators $I_E$

Die Berechnung des Ereignistyp-Indikators $I_E$ ist

$$I_E = \tan^{-1}\big(2 * (0.245 + 0.734 + 0.181)\big) * \frac{2}{\pi} = 0.741.$$

Da der berechnete Ereignistyp-Indikator $I_E$ über dem Schwellwert von 0.6 liegt ist, deutet er auf eine Veränderung im Systemverhalten hin. Ein über dem Schwellenwert liegender Ereignistyp-Indikator $I_E$ deutet auf eine schwerwiegende Veränderung im Systemverhalten hin und löst damit einen Alarm aus. Dadurch, dass der Alarm mit einem Ereignistyp assoziiert werden kann, bietet die vorliegende Erfindung außerdem einen Hinweis darauf wo im System die Anomalie aufgetreten ist. Im Gegensatz zu gängigen Anomalieerkennungsansätzen, die meist punktuelle Ereignisse analysieren, lassen sich mit der vorliegenden Erfindung auch Anomalien erkennen, die eine schleichende Veränderung im Systemverhalten hervorrufen. Außerdem ist es möglich Angriffe zu erkennen, die zwar Ereignisse, bzw. Protokollzeilen, erzeugen, die sich in ihrer Struktur und Werten nicht von denen des normalen Systemverhaltens unterscheiden, allerdings zu Veränderungen in den statistischen Merkmalen der Verteilungen der Werte führen.

**Viertes Ausführungsbeispiel: Berechnung von Token- und Ereignistyp-Indikators (Schritt "BI" in Fig. 1) mit Anwendung von Token-Indikator-Gewichten (Schritt "BG" in Fig. 1)**

Beschreibung eines Token-Indikator-Gewichts

Da der Ereignistyp-Indikator $I_E$ nur auf Basis der zugewiesenen Datentypen DT berechnet wird, können Token, die regelmäßig hohe Token-Indikatoren $I_T$ besitzen, dazu führen, dass der Ereignistyp-Indikator $I_E$ seine Aussagekraft verliert, da auch im Normalbetrieb des Computersystems, in dem keine Anomalien zu detektieren sind, hohe Ereignistyp-Indikator $I_E$ ausgegeben werden.
Um den Einfluss solcher Token T auf den Token-/Ereignistyp-Indikator $I_T$/$I_E$ anzupassen, werden nun Token-Indikator-Gewichte $w_T$ zu den einzelnen Token T eingeführt. Bei der Berechnung der Token-Indikator-Gewichte, gibt es zwei Verfahren, die gewählt werden müssen. Das sind das Verfahren, wie die Token-Indikator-Gewichte $w_T$ zu den Token T berechnet werden und das Verfahren wie die Token-Indikator-Gewichte $w_T$ in die Berechnung des Token-/Ereignistyp-Indikators $I_T$/$I_E$ einfließen.
In diesem Ausführungsbeispiel sei die Methode zur Berechnung des Token-Indikator-Gewichts zu einem Token T gegeben durch die Formel

$$w_T = \frac{1}{1 + \dfrac{10}{n}\sum_{i \in \{1,\ldots,n\}} 1_{I_{T,i} \geq 0.5} I_{T,i}},$$

wobei n eine feste natürliche Zahl ist, die die Anzahl der in die Berechnung einfließenden vergangenen Token-Indikatoren angibt und $I_{T,i}$ der i-letzte berechnete Token-Indikator $I_T$ des Tokens ist.
Die Berechnung des Token-Indikators $I_T$ und Ereignistyp-Indikator $I_E$ wird auf

$$I_{T,w} = I_T * w_T$$

$$I_E = \tan^{-1}(2 * \sum\nolimits_{T \in Token} I_{T,w}) * 2/\pi \text{ abgeändert.}$$

Berechnung eines Token-Indikator-Gewichts

Für die Berechnung des Token-Indikator-Gewichts $w_T$, sei n mit fünf und die letzten fünf Token-Indikatoren $I_T$ mit [0.245,0, 0.520,0,0.318] gegeben. Dann wird das Token-Indikator-Gewicht $w_T$ berechnet durch

$$w_T = \frac{1}{1 + \frac{10}{5}0.520} = 0.490$$

Für die Berechnung des Ereignistyp-Indikators mit Token-Indikatorgewichten $w_T$ seien die Werte der Token-Indikatoren $I_T$ gegeben durch [0.245, 0, 0, 0, 0.734, 0, 0.181]. Weiters seien die Token-Indikator-Gewichte $w_T$ gegeben durch [0.490, 0, 0, 0, 0.241, 0, 0]. Die Berechnung der Token-Indikatoren und des Ereignistyp-Indikators $I_E$ ist nun

$$I_{T,w} = 0.245 * 0.490 = 0.12$$

$$I_{E,w} = \tan^{-1}\big(2 * (0.245 * 0.490 + 0.734 * 0.241 + 0.181 * 0)\big) * \frac{2}{\pi} = 0.341$$

Da der berechnete Ereignistyp-Indikator $I_E$ unter dem Schwellwert von 0.6 liegt, kann davon ausgegangen werden, dass keine Veränderung im Systemverhalten stattgefunden hat, womit keine Maßnahmen unternommen werden müssen, da kein starker Verdacht besteht, dass etwas das Systemverhalten verändert hat.

| | |
|---|---|
| Token | T |
| Datentyp | DT |
| Token-Indikator | $I_T$ |
| Ereignistyp-Indikator | $I_E$ |
| Token-Gewicht zu Token T | $w_T$ |

**Patentansprüche**

1. Verfahren zur Detektion von anomalen Betriebszuständen eines Computersystems,

   - wobei während des Betriebs von dem Computer oder von auf dem Computer ablaufenden Prozessen Protokolle erstellt werden, indem bei Auftreten vorgegebener Ereignisse für jedes dieser Ereignisse jeweils eine Protokollzeile in Form einer Zeichenabfolge erstellt wird, wobei der Aufbau der Protokollzeile einer vom jeweiligen Computer und/oder Prozess vorgegebenen Syntax entspricht,
   - wobei die einzelnen Protokollzeilen an vorgegebenen Trennzeichen in Teilzeichenabfolgen unterteilt werden,
   - wobei den einzelnen Protokollzeilen basierend auf deren Syntax, insbesondere aufgrund der Ähnlichkeit der einzelnen Protokollzeilen zueinander und aufgrund der die Protokollzeilen aufbauenden Teilzeichenabfolgen, jeweils zumindest ein Ereignistyp zugewiesen wird,
   - wobei für jeden Ereignistyp ein Template umfassend eine Anzahl von Teilzeichenabfolgen der Protokollzeilen des jeweiligen Ereignistyp repräsentierenden Token, erstellt wird,

      - wobei das Template die Struktur der einem jeweiligen Ereignistyp zugeordneten Protokollzeilen beschreibt, und
      - wobei das Template eine Anzahl von Token (T) mit statischem Inhalt, insbesondere statischen Werten, umfasst, die in ihrer Reihenfolge in ausgewählten, insbesondere allen, Protokollzeilen des jeweiligen Ereignistyps vorhanden sind, und wobei die Token (T) mit statischem Inhalt des Templates durch Token (T) mit variablen Inhalt, insbesondere variablen Werten, unterbrochen werden, und

   - wobei die Protokollzeilen und deren Teilzeichenabfolgen charakteristisch für den Betriebszustand des Computersystems sind,

**dadurch gekennzeichnet,**

- **dass** für die Templates der einzelnen Ereignistypen erlernt wird, welchem Datentyp (DT) und/oder welchem Verteilungstyp die einzelnen Token (T) des jeweiligen Templates angehören, indem auf Grundlage einer Stichprobe umfassend eine Anzahl an Protokollzeilen des jeweiligen Ereignistyps eine Initialisierung (IT) der Datentypen (DT) der einzelnen Token (T) des Templates des Ereignistyps vorgenommen wird,

- wobei jeweils eine Werteliste für die einzelnen Token (T) erstellt wird, wobei die Werteliste des jeweiligen Tokens jeweils eine Liste derjenigen Teilzeichenketten der Protokollzeilen der Stichprobe umfasst, welche dem jeweiligen Token (T) zugehörig sind,
- wobei die einzelnen Wertelisten in einem sequenziellen Testablauf auf deren Zugehörigkeit zu vorgegebenen Datentypen (DT) und/oder Verteilungstypen, welche Eigenschaften der Wertemenge der jeweiligen Werteliste beschreiben, getestet werden,
in der folgenden Reihenfolge und zu den folgenden Datentypen (DT) und/oder Verteilungstypen:

- chronologischer Datentyp,
- statischer Datentyp,
- auf- oder absteigender Datentyp,
- kontinuierlicher Datentyp
- einzigartiger Datentyp,
- diskreter Datentyp,

- wobei den einzelnen Token (T) des Ereignistyps jeweils derjenige Datentyp (DT) und/oder Verteilungstyp zugeordnet wird, bei dem der Test in der gewählten Reihenfolge auf Zugehörigkeit zuerst positiv ausfällt, und
- wobei der Datentyp (DT) derjenigen Token (T) des Ereignistyps, bei denen keiner der Tests des Testablaufs positiv ausfällt, als sonstiger Datentyp festgelegt wird,

- **dass** periodisch sobald eine Abfolge, insbesondere eine vorgegebene Anzahl, neu erstellter Protokollzeilen eines jeweiligen Ereignistyps erstellt wurde, überprüft wird, ob die Wertelisten der einzelnen Token, denen die Teilzeichenketten der Abfolge an neu erstellten Protokollzeilen zugehören, den Datentypen (DT) und/oder Verteilungstypen des entsprechenden Tokens des jeweiligen Ereignistyps entsprechen und
- **dass** ein anomaler Betriebszustand des Computersystems erkannt wird, wenn eine Werteliste zumindest eines Tokens nicht den Eigenschaften des, dem jeweiligen Token (T) des Ereignistyps, zugeordneten Datentyps (DT) und/oder Verteilungstyps entspricht,

wobei im Rahmen des sequenziellen Testablaufs die einzelnen Wertelisten der Token (T) in folgender Reihenfolge getestet werden:

- auf das Vorliegen des chronologischen Datentyps, indem überprüft wird, ob die einzelnen Werte der Werteliste eine vorgegebene Struktur aufweisen,
- auf das Vorliegen des statischen Datentyps, indem überprüft wird, ob alle Werte der Werteliste gleich dem ersten Wert der Liste sind,
- auf das Vorliegen des auf- oder absteigenden Datentyps, indem zunächst überprüft wird, ob alle Werte der Werteliste numerische Werte sind und anschließend überprüft wird,

  ∘ ob die Werte der Werteliste jeweils größer oder gleich dem entsprechenden Wert der jeweils zeitlich vorangehenden erstellten Protokollzeile und somit aufsteigend sind oder
  o ob die Werte jeweils kleiner oder gleich dem entsprechenden Wert der jeweils zeitlich vorangehenden erstellten Protokollzeile und somit absteigend sind,

- auf das Vorliegen eines kontinuierlichen Datentyps, indem zunächst getestet wird, ob die einzelnen Werte der Werteliste numerische Werte sind, und vorzugsweise wie viele Werte einzigartig in der Stichprobe sind, und anschließend auf die Zugehörigkeit zu vorgegebenen Verteilungen oder Verteilungsfamilien getestet wird,
- auf das Vorliegen des einzigartigen Datentyps, indem überprüft wird, ob die einzelnen Werte der Werteliste jeweils einzigartig in der Werteliste sind,
- auf das Vorliegen des diskreten Datentyps, indem überprüft wird, ob die Anzahl der einzigartigen Werte der Werteliste einen vorgegebenen Schwellenwert unterschreitet.

**2.** Verfahren nach Anspruch 1, **dadurch gekennzeichnet, dass** die einzelnen Wertelisten der Token (T) im Rahmen des Tests auf einen kontinuierlichen Datentyp mit einem goodness of fit-Test, insbesondere mit einem Kolmogorov-Smirnov-Test, auf das Vorliegen ausgewählter Verteilungstypen und Verteilungsfamilien getestet werden,

wobei im Fall, dass bei der jeweiligen Werteliste der Test auf Zugehörigkeit für zumindest einen Verteilungstyp positiv ausfällt, der jeweilige Verteilungstyp dem Token (T) zugeordnet wird,
wobei insbesondere vorgesehen ist, dass

- im Fall, dass bei der jeweiligen Werteliste der Test auf Zugehörigkeit für mehrere Verteilungstypen positiv ausfällt, dem Token (T) derjenige Verteilungstyp zugeordnet wird, der den höchsten p-Wert aufweist und die restlichen Verteilungstypen für den Token (T) hinterlegt werden, und/oder
- im Fall, dass der Test auf Zugehörigkeit für keinen der getesteten Verteilungstypen positiv ausfällt, der kontinuierliche Datentyp mit der empirischen Verteilungsfunktion der Wertemenge als Verteilungstyp für den jeweiligen Token (T) hinterlegt wird.

**3.** Verfahren nach Anspruch 1 oder 2, **dadurch gekennzeichnet, dass** die einzelnen Wertelisten der Token (T) im Rahmen des Tests auf einen kontinuierlichen Datentyp auf das Vorliegen ausgewählter Verteilungsfamilien getestet werden,
wobei zunächst die Parameter, insbesondere Lage-, Skalen- und/oder Formparameter, der jeweiligen Verteilungsfamilie geschätzt werden und anschließend der goodness of fit-Test, insbesondere der Kolmogorov-Smirnov-Test, auf die Zugehörigkeit zur der mit den geschätzten Parametern spezifizierten Verteilungsfamilie durchgeführt wird.

**4.** Verfahren nach einem der vorangehenden Ansprüche, **dadurch gekennzeichnet, dass** für die Überprüfung, ob die Werteliste eines Tokens dem, dem jeweiligen Token (T) zugeordneten, Datentyp (DT) und/oder Verteilungstyp angehört, ein, insbesondere modifizierter, Kolmogorov-Smirnov-Test für den kontinuierlichen und/oder ein Multinomialtest für den diskreten Datentyp angewendet wird.

**5.** Verfahren nach einem der vorangehenden Ansprüche, **dadurch gekennzeichnet, dass**, wenn die Werteliste eines Tokens nicht dem, dem jeweiligen Token (T) zugeordneten, Datentyp (DT) und/oder Verteilungstyp entspricht, für den Datentyp (DT) und/oder den Verteilungstyp des Tokens eine neuerliche Initialisierung durchgeführt wird, wobei insbesondere vorgesehen ist, dass für Token, denen der sonstige Datentyp zugewiesen wurde, eine neuerliche Initialisierung, insbesondere unmittelbar oder nach einer vorgegebenen Anzahl an aufeinanderfolgenden Updateschritten (UT) durchgeführt wird.

**6.** Verfahren nach Anspruch 5, **dadurch gekennzeichnet, dass**, wenn die Werteliste eines Tokens nicht dem, dem jeweiligen Token (T) zugeordneten, Datentyp (DT) und/oder Verteilungstyp entspricht, dem jeweiligen Token (T) der sonstige Datentyp zugeordnet wird.

**7.** Verfahren nach einem der Ansprüche 5 oder 6, **dadurch gekennzeichnet, dass** bei dem Updateschritt (UT) der Datentypen (DT),

- wenn die Werteliste eines Tokens nicht mehr dem, dem jeweiligen Token (T) zugewiesenen, statischen Datentyp entspricht, dem Token (T) der diskrete Datentyp zugeordnet wird, und/oder
- im Fall, dass bei der Initialisierung des Datentyps (DT) eines Tokens im Rahmen des Tests auf einen kontinuierlichen Datentyp für den Token mehrere Verteilungstypen hinterlegt wurden, die Werteliste des jeweiligen Tokens auf deren Zugehörigkeit zu einem der restlichen hinterlegten Verteilungstypen getestet wird, wenn die Werteliste des jeweiligen Tokens nicht mehr dem zuvor vorliegenden Verteilungstyp entspricht.

**8.** Verfahren nach einem der Ansprüche 5, 6 oder 7, **dadurch gekennzeichnet, dass** bei einem Updateschritt (UT) der Datentyp (DT) eines Tokens erst geändert wird, wenn wiederholt festgestellt wird, dass der Test auf Vorliegen des, dem Token (T) aktuell zugeordneten, Datentyps im Updateschritt negativ ausfällt.

**9.** Verfahren nach einem der vorangehenden Ansprüche, **dadurch gekennzeichnet, dass** bei einem Updateschritt (UT) der Datentypen (DT) einzelner Token, denen der einzigartige Datentyp zugeordnet wurde, beim Test, ob die Werteliste des jeweiligen Tokens, dem einzigartigen Datentyp entspricht, nur die Werte einer vorgegebenen Anzahl zeitlich vorangehender Protokollzeilen berücksichtigt werden.

**10.** Verfahren nach Anspruch 5, 6, 7 oder 8, **dadurch gekennzeichnet, dass** Token-Indikatoren ($I_T$) für die einzelnen Token (T) des Templates eines Ereignistyps basierend auf einer Liste der, dem jeweiligen Token (T) jeweils zuletzt zugeordneten, Datentyp (DT) und/oder Verteilungstyp ermittelt werden, wobei die Token-Indikatoren ($I_T$) die Wahrscheinlichkeit dafür angeben, dass eine Veränderung im Verhalten bei der Zuordnung des Datentyps und/oder Verteilungstyps des jeweiligen Tokens des Ereignistyps aufgetreten ist.

11. Verfahren nach Anspruch 10, **dadurch gekennzeichnet, dass** auf Grundlage der einzelnen Token-Indikatoren ($I_T$) der Token (T) eines Ereignistyps ein Ereignistyp-Indikator ($I_E$) für diesen Ereignistyp ermittelt wird, wobei der Ereignistyp-Indikator ($I_E$) die Wahrscheinlichkeit dafür angibt, dass eine Veränderung im Verhalten der Protokollzeilen des jeweiligen Ereignistyps aufgetreten ist.

12. Verfahren nach Anspruch 10 oder 11, **dadurch gekennzeichnet, dass** bei der Ermittlung des Token-Indikators ($I_T$) und/oder Ereignistyp-Indikators ($I_E$) des jeweiligen Ereignistyps die Token-Indikatoren ($I_T$) der einzelnen Token (T) gewichtet berücksichtigt werden, wobei die Token-Indikatoren ($I_T$) derjenigen Token (T) stärker gewichtet werden, die eine geringere Wahrscheinlichkeit für eine Veränderung aufweisen.

13. Verfahren nach einem der Ansprüche 10, 11 oder 12, **dadurch gekennzeichnet, dass** Token, die, insbesondere regelmäßig, einen Ereignistyp-Indikator ($I_E$) mit einem Wert nahe bei 1 aufweisen, bei einem Updateschritt (UT) der Datentypen (DT), unberücksichtigt bleiben.

14. Verfahren nach einem der vorangehenden Ansprüche, **dadurch gekennzeichnet, dass** nur für ausgewählte, insbesondere die variablen, Token (T) eines jeweiligen Ereignistyps analysiert wird, ob die Werteliste des jeweiligen Tokens dem, dem jeweiligen Token (T) aktuell zugeordneten, Datentyp (DT) und/oder Verteilungstyp entspricht, wobei insbesondere vorgesehen ist, dass vorab bekannt ist, welche Token eines Ereignistyps statische und/oder variable Token sind.

15. Datenträger, auf dem ein Programm zur Durchführung eines Verfahrens nach einem der vorangehenden Ansprüche abgespeichert ist.

## Claims

1. Method for detecting abnormal operating states of a computer system,

   - wherein, during the operation of the computer or processes running on the computer, protocols are created in that, when predetermined events occur, for each of these events respectively, a protocol line is created in the form of character string, wherein the structure of the protocol line corresponds to a syntax predetermined by the respective computer and/or process,
   - wherein the individual protocol lines are divided into substrings at predefined separators,
   - wherein at least one event type is assigned respectively to each of the individual protocol lines based on their syntax, in particular on the basis of the similarity of the individual protocol lines to one another and on the basis of the substrings constituting the protocol lines,
   - wherein for each event type a template is created comprising a number of substrings of the protocol lines of the token representing the respective event type,

     - wherein the template describes the structure of the protocol lines associated with a respective event type, and
     - wherein the template comprises a number of tokens (T) with static content, in particular static values, which are present in their sequence in selected, in particular all, protocol lines of the respective event type, and wherein the tokens (T) with static content of the template are interrupted by tokens (T) with variable content, in particular variable values, and

   - wherein the protocol lines and their substrings are characteristic of the operating state of the computer system, **characterised in that**,
   - for the templates of the individual event types it is learned which data type (DT) and/or which distribution type the individual tokens (T) of the respective templates belong to by initialising (IT) the data types (DT) of the individual tokens (T) of the template of the event type on the basis of a random sample comprising a number of protocol lines of the respective event type,

- wherein a value list is created for the individual tokens (T), wherein the value list of the respective token comprises respectively a list of those substrings of the protocol lines of the random sample which are associated with the respective token (T),
- wherein the individual value lists are checked in a sequential test sequence to see if they belong to predetermined data types (DT) and/or distribution types, which describe properties of the value set of the respective value list,

in the following sequence and to the following data types (DT) and/or distribution types:

- chronological data type,
- static data type,
- ascending or descending data type,
- continuous data type
- unique data type,
- discrete data type,

- wherein the individual tokens (T) of the event type are each assigned to the data type (DT) and/or distribution type, for which the test is first positive as belonging in the selected sequence, and
- wherein the data type (DT) of those tokens (T) of the event type for which none of the tests of the test sequence is positive is set as the other data type,

- **in that** periodically as soon as a sequence, in particular a predetermined number, of newly created protocol lines of a respective event type has been created, it is checked whether the value lists of the individual tokens, to which the substrings of the sequence of newly created protocol lines belong, correspond to the data types (DT) and/or distribution types of the corresponding token of the respective event type and
- **in that** an abnormal operating state of the computer system is detected if a value list of at least one token does not correspond to the properties of the data type (DT) and/or distribution type assigned to the respective token (T) of the event type,

wherein in the sequential test procedure the individual value lists of the tokens (T) are tested in the following sequence:

- for the presence of the chronological data type, **in that** it is tested whether the individual values of the value list have a predetermined structure,
- for the presence of the static data type, **in that** it is tested whether all values of the value list are equal to the first value of the list,
- for the presence of the ascending or descending data type, by first checking whether all values in the value list are numerical values and then checking,

o whether the values of the value list are greater than or equal to the corresponding value of the respectively chronologically preceding protocol line and are thus ascending or
o whether the values are respectively less than or equal to the corresponding value of the chronologically preceding protocol line and are thus descending,

- for the presence of a continuous data type, by first testing whether the individual values of the value list are numerical values, and preferably how many values are unique in the random sample, and then checking for belonging to predetermined distributions or distribution families,
- for the presence of the unique data type, by checking whether the individual values of the value list are unique respectively in the value list,
- for the presence of the discrete data type, by checking whether the number of unique values in the value list falls below a prespecified threshold value.

2. Method according to claim 1, **characterised in that** the individual value lists of the tokens (T) are tested in the test for a continuous data type by a goodness of fit test, in particular a Kolmogorov-Smirnov test, for the presence of selected distribution types and distribution families,

wherein in the event that the test for belonging to at least one distribution type is positive for the respective value list, the respective distribution type is assigned to the token (T),
wherein in particular it is provided that

- in the event that for the respective value list the test for belonging is positive for several distribution types, the distribution type with the highest p-value is assigned to the token (T) and the remaining distributions types are stored for the token (T), and/or
- in the event that the test for belonging is not positive for any of the tested distribution types, the continuous data type with the empirical distribution function of the value set is stored as the distribution type for the respective token (T).

3. Method according to claim 1 or 2, **characterised in that** the individual value lists of the tokens (T) are tested for the presence of selected distribution families as part of the test for a continuous data type,
wherein firstly the parameters, in particular position, scale and/or shape parameters, of the respective distribution family are estimated and then the goodness-of-fit test, in particular the Kolmogorov-Smirnov test, is carried out for belonging to the distribution family specified with the estimated parameters.

4. Method according to any of the preceding claims, **characterised in that** a Kolmogorov-Smirnov test, in particular a modified Kolmogorov-Smirnov test, for the continuous data type and/or a multinomial test for the discrete data type, is used for checking whether the value list of a token belongs to the data type (DT) and/or distribution type assigned to the respective token (T).

5. Method according to any of the preceding claims, **characterised in that** if the value list of a token does not correspond to the data type (DT) and/or distribution type assigned to the respective token (T), a new initialisation is carried out for the data type (DT) and/or the distribution type of the token,
wherein in particular it is provided that for tokens, to which the other data type has been assigned, a new initialisation is carried out, in particular immediately or after a predetermined number of successive update steps (UT).

6. Method according to claim 5, **characterised in that** if the value list of a token does not correspond to the data type (DT) and/or distribution type assigned to the respective token (T), the other data type is assigned to the respective token (T).

7. Method according to any of claims 5 or 6, **characterised in that** in the update step (UT) of the data types (DT),

- if the value list of a token no longer corresponds to the static data type assigned to the respective token (T), the discrete data type is assigned to the token (T), and/or
- in the event that several distribution types have been stored for the tokens during the initialisation of the data type (DT) of a token as part of the test for a continuous data type, the value list of the respective token is checked for belonging to one of the remaining stored distribution types, if the value list of the respective token no longer corresponds to the previously existing distribution type.

8. Method according to any of claims 5, 6, or 7, **characterised in that** in an update step (UT) the data type (DT) of a token is only changed if it is repeatedly determined that the test for the presence of the data type currently assigned to the token (T) in the update step is negative.

9. Method according to any of the preceding claims, **characterised in that** in an update step (UT) of the data types (DT) of individual tokens, to which the unique data type has been assigned, only the values of a predetermined number of temporally preceding protocol lines are taken into account when testing whether the value list of the respective token corresponds to the unique data type.

10. Method according to claim 5, 6, 7, or 8, **characterised in that** token indicators ($I_T$) for the individual tokens (T) of the template of an event type are determined based on a list of the data type (DT) and/or distribution type last assigned to the respective token (T), wherein the token indicators ($I_T$) indicate the probability that a change in the behaviour has occurred on the assignment of the data type and/or distribution type of the respective token of the event type.

11. Method according to claim 10, **characterised in that** on the basis of the individual token indicators ($I_T$) of the tokens (T) of an event type an event type indicator ($I_E$) is determined for this event type, wherein the event type indicator ($I_E$) indicates the probability that a change in the behaviour of the protocol lines of the respective event type has occurred.

12. Method according to claim 10 or 11, **characterised in that** when determining the tokens indicator ($I_T$) and/or event type indicator ($I_E$) of the respective event type, the token indicators ($I_T$) of the individual tokens (T) are taken into account with weighting, wherein the token indicators ($I_T$) of those tokens (T) are weighted more heavily which have a lower probability of change.

13. Method according to any of claims 10, 11 or 12, **characterised in that** tokens, which, in particular regularly, have an event type indicator ($I_E$) with a value close to 1, are not taken into account in an update step (UT) of the data types (DT).

14. Method according to any of the preceding claims, **characterised in that** only for selected, in particular the variable, tokens (T) of a respective event type it is analysed whether the value list of the respective token corresponds to the data type (DT) and/or distribution type currently assigned to the respective token (T), wherein in particular it is provided that it is known in advance which tokens of an event type are static and/or variable tokens.

15. Data carrier on which a program for carrying out a method according to any of the preceding claims is stored.

**Revendications**

1. Procédé de détection d'états de fonctionnement anormaux d'un système informatique,

- dans lequel, pendant le fonctionnement de l'ordinateur ou de processus se déroulant sur l'ordinateur, des protocoles sont établis, en ce que, lors de l'apparition d'événements prédéterminés, une ligne de protocole est établie pour chacun de ces événements sous la forme d'une chaîne de caractères, dans lequel la structure de la ligne de protocole correspond à une syntaxe prédéterminée par l'ordinateur et/ou le processus respectif,
- dans lequel les différentes lignes de protocole sont subdivisées en sous-chaînes au niveau de séparateurs prédéterminés,
- dans lequel au moins un type d'événement est attribué respectivement aux différentes lignes de protocole sur la base de leur syntaxe, en particulier sur la base de la similitude des différentes lignes de protocole entre elles et sur la base des sous-chaînes constituant les lignes de protocole,
- dans lequel un modèle comprenant un certain nombre de sous-chaînes des lignes de protocole du jeton représentant le type d'événement respectif est créé pour chaque type d'événement,

    - dans lequel le modèle décrit la structure des lignes de protocole attribuées à un type d'événement respectif et
    - dans lequel le modèle comprend un certain nombre de jetons (T) à contenu statique, en particulier des valeurs statiques, qui sont présents dans leur ordre dans des lignes de protocole sélectionnées, en particulier toutes, du type d'événement respectif, et dans lequel les jetons (T) à contenu statique du modèle sont interrompus par des jetons (T) à contenu variable, en particulier des valeurs variables, et

- dans lequel les lignes de protocole et leurs sous-chaînes sont caractéristiques de l'état de fonctionnement du système informatique,
**caractérisé en ce que**
- pour les modèles des différents types d'événement, on apprend à quel type de données (DT) et/ou à quel type de distribution appartiennent les différents jetons (T) du modèle respectif en procédant à une initialisation (IT) des types de données (DT) des différents jetons (T) du modèle du type d'événement sur la base d'un échantillon aléatoire comprenant un nombre de lignes de protocole du type d'événement respectif,

    - dans lequel une liste de valeurs est respectivement établie pour les différents jetons (T), dans lequel la liste de valeurs du jeton respectif comprend respectivement une liste de ces sous-chaînes des lignes de protocole de l'échantillon aléatoire qui sont associées au jeton respectif (T),
    - dans lequel les différentes listes de valeurs sont testées dans une procédure de test séquentielle concernant leur appartenance à des types de données (DT) prédéterminés et/ou à des types de distribution qui décrivent des propriétés de l'ensemble de valeurs de la liste de valeurs respective,
    dans l'ordre suivant et pour les types de données (DT) et/ou les types de distribution suivants :

        - type de données chronologique,
        - type de données statique,
        - type de données croissant ou décroissant, type de données continu

- type de données unique,
- type de données discret,

- dans lequel le type de données (DT) et/ou le type de distribution pour lequel le test est d'abord positif dans l'ordre choisi pour l'appartenance est respectivement attribué aux différents jetons (T) du type d'événement, et
- dans lequel le type de données (DT) des jetons (T) du type d'événement pour lesquels aucun des tests de la procédure de test n'est positif est défini comme un autre type de données,

- **en ce que** périodiquement, dès qu'une séquence, en particulier un nombre prédéterminé, de lignes de protocole nouvellement créées d'un type d'événement respectif a été établie, il est vérifié si les listes de valeurs des différents jetons, auxquels appartiennent les sous-chaînes de la séquence de lignes de protocole nouvellement créées, correspondent aux types de données (DT) et/ou aux types de distribution du jeton correspondant du type d'événement respectif et
- **en ce qu'**un état de fonctionnement anormal du système informatique est détecté lorsqu'une liste de valeurs d'au moins un jeton ne correspond pas aux propriétés du type de données (DT) et/ou du type de distribution associé au jeton (T) respectif du type d'événement,

dans lequel, dans le cadre de la procédure de test séquentielle, les différentes listes de valeurs des jetons (T) sont testées dans l'ordre suivant :

- en ce qui concerne la présence du type de données chronologique, en vérifiant si les différentes valeurs de la liste de valeurs présentent une structure prédéterminée,
- en ce qui concerne la présence du type de données statique, en vérifiant si toutes les valeurs de la liste de valeurs sont égales à la première valeur de la liste,
- en ce qui concerne la présence du type de données ascendant ou descendant, en vérifiant d'abord si toutes les valeurs de la liste de valeurs sont des valeurs numériques, puis en vérifiant

- si les valeurs de la liste de valeurs sont supérieures ou égales à la valeur correspondante de la ligne de protocole créée précédemment dans le temps, et sont donc croissantes, ou
- si les valeurs sont respectivement inférieures ou égales à la valeur correspondante de la ligne de protocole créée précédemment dans le temps et sont donc décroissantes,

- en ce qui concerne la présence d'un type de données continu, en testant d'abord si les différentes valeurs de la liste de valeurs sont des valeurs numériques et, de préférence, combien de valeurs sont uniques dans l'échantillon, puis en testant l'appartenance à des distributions ou à des familles de distribution prédéterminées,
- en ce qui concerne la présence du type de données unique, en vérifiant si les différentes valeurs de la liste de valeurs sont uniques respectivement dans la liste de valeurs,
- en ce qui concerne la présence du type de données discret, en vérifiant si le nombre de valeurs uniques de la liste de valeurs est inférieur à une valeur seuil prédéterminée.

2. Procédé selon la revendication 1, **caractérisé en ce que** les différentes listes de valeurs des jetons (T) sont testées dans le cadre du test pour un type de données continu avec un test de qualité de l'ajustement, en particulier avec un test Kolmogorov-Smirnov, pour déterminer la présence de types de distribution et de familles de distribution sélectionnés,

dans lequel, dans le cas où, pour la liste de valeurs respective, le test d'appartenance est positif pour au moins un type de distribution, le type de distribution respectif est attribué au jeton (T),
dans lequel il est notamment prévu que

- dans le cas où, pour la liste de valeurs respective, le test d'appartenance est positif pour plusieurs types de distribution, le type de distribution qui présente la valeur p la plus élevée est attribué au jeton (T) les types de distribution restants sont enregistrés pour le jeton (T), et/ou
- dans le cas où le test d'appartenance n'est positif pour aucun des types de distribution testés, le type de données continu est enregistré avec la fonction de distribution empirique de l'ensemble de valeurs comme type de distribution pour le jeton (T) respectif.

3. Procédé selon la revendication 1 ou 2, **caractérisé en ce que** les différentes listes de valeurs des jetons (T) sont testées pour déterminer la présence de familles de distribution sélectionnées dans le cadre du test sur un type de données continu,

dans lequel les paramètres, en particulier les paramètres de position, d'échelle et/ou de forme, de la famille de distribution respective sont d'abord estimés et ensuite le test de qualité de l'ajustement, en particulier le test Kolmogorov-Smirnov, est effectué pour déterminer l'appartenance à la famille de distribution spécifiée avec les paramètres estimés.

4. Procédé selon l'une quelconque des revendications précédentes, **caractérisé en ce que**, pour vérifier si la liste de valeurs d'un jeton appartient au type de données (DT) et/ou au type de distribution associé au jeton (T) respectif, un test de Kolmogorov-Smirnov, en particulier modifié, est appliqué pour le type de données continu et/ou un test multinomial pour le type de données discret.

5. Procédé selon l'une quelconque des revendications précédentes, **caractérisé en ce que**, lorsque la liste de valeurs d'un jeton ne correspond pas au type de données (DT) et/ou au type de distribution associé au jeton (T) respectif, une nouvelle initialisation est effectuée pour le type de données (DT) et/ou le type de distribution du jeton, dans lequel il est prévu en particulier qu'une nouvelle initialisation est effectuée pour les jetons auxquels l'autre type de données a été attribué, en particulier directement ou après un nombre prédéterminé d'étapes de mise à jour (UT) successives.

6. Procédé selon la revendication 5, **caractérisé en ce que**, si la liste de valeurs d'un jeton ne correspond pas au type de données (DT) et/ou au type de distribution associé au jeton (T) respectif, l'autre type de données est associé au jeton (T) respectif.

7. Procédé selon l'une quelconque des revendications 5 ou 6, **caractérisé en ce que**, lors de l'étape de mise à jour (UT) du type de données (DT),

- si la liste de valeurs d'un jeton ne correspond plus au type de données statique attribué au jeton (T) respectif, le type de données discret est attribué au jeton (T), et/ou
- dans le cas où plusieurs types de distribution ont été enregistrés pour le jeton lors de l'initialisation du type de données (DT) d'un jeton dans le cadre du test sur un type de données continu, la liste de valeurs du jeton respectif est testée en ce qui concerne son appartenance à l'un des types de distribution restants enregistrés, si la liste de valeurs du jeton respectif ne correspond plus au type de distribution présent auparavant.

8. Procédé selon l'une quelconque des revendications 5, 6 ou 7, **caractérisé en ce que**, lors d'une étape de mise à jour (UT), le type de données (DT) d'un jeton n'est modifié que lorsqu'il est constaté de manière répétée que le test relatif à la présence du type de données actuellement associé au jeton (T) lors de l'étape de mise à jour est négatif.

9. Procédé selon l'une quelconque des revendications précédentes, **caractérisé en ce que**, lors d'une étape de mise à jour (UT) des types de données (DT) de différents jetons auxquels le type de données unique a été attribué, seules les valeurs d'un nombre prédéterminé de lignes de protocole temporellement précédentes sont prises en compte lors du test visant à déterminer si la liste de valeurs du jeton respectif correspond au type de données unique.

10. Procédé selon la revendication 5, 6, 7 ou 8, **caractérisé en ce que** des indicateurs de jeton ($I_T$) sont déterminés pour les différents jetons (T) du modèle d'un type d'événement sur la base d'une liste du type de données (DT) et/ou du type de distribution attribué en dernier lieu au jeton (T) respectif, dans lequel les indicateurs de jeton ($I_T$) indiquent la probabilité qu'un changement de comportement soit survenu lors de l'attribution du type de données et/ou du type de distribution du jeton respectif du type d'événement.

11. Procédé selon la revendication 10, **caractérisé en ce que**, sur la base des différents indicateurs de jeton ($I_T$) des jetons (T) d'un type d'événement, un indicateur de type d'événement ($I_E$) est déterminé pour ce type d'événement, dans lequel l'indicateur de type d'événement ($I_E$) indique la probabilité qu'une modification du comportement des lignes de protocole du type d'événement respectif se soit produite.

12. Procédé selon la revendication 10 ou 11, **caractérisé en ce que** lors de la détermination de l'indicateur de jeton ($I_T$) et/ou de l'indicateur de type d'événement ($I_E$) du type d'événement respectif, les indicateurs de jeton ($I_T$) des différents jetons (T) sont pris en compte de manière pondérée, dans lequel les indicateurs de jeton ($I_T$) des jetons (T) qui présentent une probabilité plus faible de changement sont pondérés plus fortement.

**13.** Procédé selon l'une quelconque des revendications 10, 11 ou 12, **caractérisé en ce que** les jetons qui présentent, en particulier régulièrement, un indicateur de type d'événement ($I_E$) avec une valeur proche de 1, ne sont pas pris en compte lors d'une étape de mise à jour (UT) des types de données (DT).

**14.** Procédé selon l'une quelconque des revendications précédentes, **caractérisé en ce que** l'on analyse uniquement pour des jetons (T) sélectionnés, en particulier les jetons variables, d'un type d'événement respectif, si la liste de valeurs du jeton respectif correspond au type de données (DT) et/ou au type de distribution actuellement associé au jeton (T) respectif, en prévoyant en particulier que l'on sait au préalable quels jetons d'un type d'événement sont des jetons statiques et/ou variables.

**15.** Support de données sur lequel un programme est enregistré pour la mise en oeuvre d'un procédé selon l'une quelconque des revendications précédentes.

Fig. 1

Fig. 2

(UT)

statisch

auf-/absteigend    einzigartig    kontinuierlich

diskret

sonstig

neuerliche Initialisierung

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018270262 A
- EP 19169705
- EP 504612018 A
- EP 3267625 A
- EP 506012016 A
- WO 502852019 A
- EP 20160854


**In der Beschreibung aufgeführte Nicht-Patentliteratur**

- **WURZENBERGER, M. ; LANDAUER, M. ; SKO-PIK, F. ; KASTNER, W.** AECID-PG: A Tree-Based Log Parser Generator To Enable Log Analysis. *2019 IFIP/IEEE Symposium on Integrated Network and Service Management (IM),* April 2019, 7-12
- **ZHANG, J.** Powerfulgoodness-of-fit tests based on the likelihood ratio. *Journal of the Royal Statistical Society: Series B (Statistical Methodology),* 2002, vol. 64 (2), 281-294
- **KNUTH, D. E.** Seminumerical algorithms. Addison-Wesley Professional. *Art of computer programming,* 2014, vol. 2
- **RAZALI, N. M. ; WAH, Y. B.** Power comparisons of shapiro-wilk, kolmogorov-smirnov, lilliefors and anderson-darling tests. *Journal of statistical modeling and analytics,* 2011, vol. 2 (1), 21-33
- **LILLIEFORS, H. W.** On the Kolmogorov-Smirnov test for the exponential distribution with mean unknown. *Journal of the American Statistical Association,* 1969, vol. 64 (325), 387-389
- **LAPEYRE, B.** *Introduction to Monte-Carlo Methods. Lecture, Halmstad, Sweden,* 2007, 2-4